(19) Europäisches Patentamt
European Patent Office
Office européen des brevets

(11) Publication number: **0 379 462 B1**

# (12) EUROPEAN PATENT SPECIFICATION

(45) Date of publication of patent specification: **22.02.95**

(51) Int. Cl.[6]: **C08G 18/81**, C08G 18/50, C08G 18/38, C08G 18/10, C08G 18/48, C08F 299/06, G02B 1/04, C08G 65/32

(21) Application number: **90810002.7**

(22) Date of filing: **04.01.90**

## (54) Vinylic macromers containing perfluoropolyalkylether and polyalkylether segments, polymers, copolymers and ophthalmic devices made therefrom.

(30) Priority: **11.01.89 US 296169**
**11.01.89 US 296170**

(43) Date of publication of application:
**25.07.90 Bulletin 90/30**

(45) Publication of the grant of the patent:
**22.02.95 Bulletin 95/08**

(84) Designated Contracting States:
**AT BE CH DE DK ES FR GB GR IT LI LU NL SE**

(56) References cited:
**EP-A- 0 273 449**
**EP-A- 0 322 624**

(73) Proprietor: **CIBA-GEIGY AG**
**Klybeckstrasse 141**
**CH-4002 Basel (CH)**

(72) Inventor: **Goldenberg, Merrill**
**626 Kent Avenue**
**Teaneck, N.J. 07666 (US)**

EP 0 379 462 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The instant invention relates to vinylic macromers containing perfluoropolyalkylether and polyalkylether segments, polymers and ophthalmic devices, such as intraocular implants and contact lenses and particularly soft hydrogel contact lenses made therefrom and to crosslinked copolymers of (a) said vinylic macromers containing perfluoropolyalkylether and polyalkylether segments with (b) minor amounts of vinylic comonomers and ophthalmic devices such as intraocular implants and contact lenses and particularly soft hydrogel contact lenses made therefrom. These devices possess an advantageous blend of desirable properties including high oxygen permeability, excellent wettability, high mechanical strength, flexibility, optical clarity, biocompatibility, and capability of being sterilized in boiling water. The perfluoropolyalkylether segments provide in large part the high oxygen permeability, the polyalkylether segments provide the wettability and the unique polymer structure provides the desired mechanical properties.

In general, most existing hydrogel soft contact lens materials are based on HEMA, also known as 2-hydroxyethyl methacrylate or as ethylene glycol monomethacrylate, with one or more optional comonomers as described in U.S. Patent Nos. 2,976,576, 3,841,985 and 3,985,697. Other hydrogels based on N-vinylpyrrolidone copolymers and acrylamide copolymers are disclosed in U.S. Patent Nos. 3,639,524 and 3,929,741. These prior art hydrogel polymers generally suffer from several inherent problems being relatively weak mechanical strength, low dissolved oxygen permeability or a combination of both. Most lenses are made by either of two procedures, one requiring costly lathing and polishing steps and the other using delicate spin casting techniques where polymerization, crosslinking, and shaping are done simultaneously.

Perfluoropolyalkylether segments have been proposed as constituents of contact lens materials. For example:

In U.S. Patent Nos. 3,940,207 and 3,944,347 poly(perfluoropropylene oxide) oils were incorporated into a contact lens matrix. However, in this case the material is extremely hydrophobic and the oil can leach out.

In U.S. Patent No. 3,542,461 a terpolymer is formed from hexafluoroacetone, tetrafluoroethylene and ethylene. The polymers so formed are in general of insufficient wettability and some are not of complete clarity.

In U.S. Patent No. 4,440,918 and European Patent Application 084406, it is disclosed to make ophthalmic devices such as contact lenses from telechelic perfluorinated polyether polymers. These polymers are extremely hydrophobic and require the addition of a hydrophilic comonomer or surface treatment to improve wettability. Although an increase in wettability is described, the increase is generaily insufficient to overcome the hydrophobic nature of the perfluoropolyether segments and to provide adequate patient comfort. Also, surface treatments are generally not permanent.

In Japanese Patent Applications 61-111308, 61-112047, 61-123609, 61-126052, 61-285425 and 61-285426, are described perfluoroalkylether containing polymers useful as raw materials for oxygen permeable devices and medical devices such as contact lenses. These polymers are of poor wettability and require the addition of hydrophilic comonomers or surface treatments to obtain the requisite wettability. Also some of these materials have a tendency of being yellow in color.

In European Patent Application 253515 is described the use of a perfluoropolyether monomer for use in soft contact lenses. These materials are also extremely hydrophobic and need a substantial quantity of hydrophilic comonomer to obtain wettability and in addition require the inclusion of the N-vinylpyrrolidone comonomer to obtain clarity.

Perfluoropolyether monomers useful in condensation polymerizations are disclosed in European Patent Application 084406 and Japanese Patent Application 61-166834. In the Japanese application a perfluoropolyether polytriazine material derived from a multivalent nitrile polymer is used in gas permeating materials such as contact lenses. These materials appear yellow in color. The perfluoropolyether monomers of both patent applications are hydrophobic and require the presence of a hydrophilic comonomer. In addition, condensation polymers are generally of poor quality for contact lens use because, for example, of the difficulty in obtaining a sufficiently high molecular weight with the concommitant desirable physical properties.

In European Patent Application 273449 are described aqueous dispersions of fluorinated polyurethanes containing ionic groups and their use for textile coatings.

It is an object of the present invention to overcome the disadvantages of the prior art by providing a modified perfluoropolyalkylether macromer which is inherently hydrophilic. This is accomplished by use of a block structure where the perfluoropolyalkylether block provides a substantial portion of the oxygen permeability properties and the polyalkylether block provides the hydrophilicity.

It is further object to provide a perfluoropolyalkylether/polyalkylether macromer which can be crosslinked in the absence or presence of a minor amount of another vinylic comonomer to form a soft water-swellable hydrogel contact lens having high oxygen permeability, good wettability, high mechanical strength, flexibility, optical clarity, biocompatibility, and capability of being sterilized in boiling water. It is a further object of the present invention to provide medium to high water content contact lenses obviating, or substantially reducing, the drawbacks of the prior art.

It is further object of the present invention to provide a method of preparing such contact lenses by crosslinking a vinylic perfluoropolyalkylether/polyalkylether macromer in the absence or presence of a minor amount of another vinylic comonomer in a solvent in a mold, such as a spin cast mold or a static cast mold, and equilibrating the resulting solvent swollen crosslinked contact lens in an aqueous medium.

A further object of the invention is to provide a method of correcting visual defects in the form of refractive errors by fitting to the patient's eye in need of the same, a corrective contact lens of such polymer.

These and other objects of the invention are apparent from the following detailed description of the invention.

The instant invention provides a macromer containing perfluoropolyalkylether and polyalkylether segments and ethylenically unsaturated moieties, having the formula I,

$$E\text{-}T\text{-}L\text{-}Q\text{-}X\text{-}M\text{-}X\text{-}Q\text{-}L\text{-}(T\text{-}E)_p$$

wherein M denotes Z or G, p denotes zero or one and wherein

Z is $-(C_aF_{2a}O)_b-CF_2-$, where a is 1 to 4 or a mixture thereof and b is 2 to 200; X is a direct bond, $-CH_2-$, $-CH_2OCH_2CHOHCH_2-$, $-CH_2(OCH_2CH_2)_y-$ or carbonyl where y is 1 to 10;

Q is a direct bond, -CONH-R-NHCO- or -ACONH-R-NHCO- where A is oxa or imino and R is a divalent aliphatic group having from 2 to 14 carbon atoms, a divalent 5-or 6-membered cycloaliphatic group having 5 to 14 carbon atoms or an arylene group having 6 to 14 carbon atoms, and wherein the A of Q is attached to X;

L is $-A(C_mH_{2m}O)_nC_mH_{2m}AY$ or La, where Y is a direct bond when L is divalent or hydrogen when L is monovalent, and m is 2 to 4 or a mixture thereof and n is 5 to 100; wherein A is as hereinbefore defined;

T is $-CONH-R_5A-$ or $-CONH-R-NHCOOR_5A-$ or -CONH-R-NHCO-A- or $-R_5A-$ or a direct bond where A thereof is attached to E, where $R_5$ is alkylene or hydroxy-substituted alkylene of 2 to 15 carbon atoms and A and R are as hereinbefore defined;

E is $-CO-C(R_1)=CHR_2$ or $-CONH\text{-phenyl-}C(R_1)=CR_2H$ or $-CONH-C(R_4)_2\text{-phenyl-}C(R_1)=CHR_2$

where $R_1$ is hydrogen or methyl, and $R_2$ is hydrogen, methyl or $-COOR_3$,

where $R_3$ is hydrogen or alkyl of 1 to 4 carbon atoms with the proviso that, when $R_1$ is methyl, $R_2$ is hydrogen; and wherein $R_4$ is hydrogen or methyl;

G is $-(C_aF_{2a}O)_b-CF_2[CH_2-OCONH-R-NHCOOCH_2CF_2(OC_aF_{2a})_b]_x-$ or $-(C_aF_{2a}O)_b-CF_2[CH_2-NHCONH-R-NHCONHCH_2CF_2(OC_aF_{2a})_b]_x-$ where x is 1 to 3; and a, b and R are as above; and

La is $-A(C_mH_{2m}O)_n[C_mH_{2m}ACONH-R-NHCOA(C_mH_{2m}O)_{na}]_zC_mH_{2m}AY$

where na is 5 to 100, z is 1 to 10 and Y is a direct bond when La is divalent or hydrogen when La is monovalent, and A, R, m and n are as hereinbefore defined.

More specifically the macromer is as seen in formulas Ia to Id,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

wherein all the variables are as hereinbefore defined.

The instant invention further provides a crosslinked polymer which is the addition polymerization product of

(a) a macromer containing perfluoropolyalkylether and polyalkylether segments and ethylenically unsaturated moieties, having the formula I, more specifically as seen in formulas Ia to Id,

E-T-L-Q-X-Z-X-Q-L-T-E, (Ia)

E-T-L-Q-X-Z-X-Q-L, (Ib)

E-T-L-Q-X-G-X-Q-L-T-E, or (Ic)

E-T-L-Q-X-G-X-Q-L (Id)

as hereinbefore defined, and

b) a vinylic comonomer which is

(i) a hydrophilic vinylic monomer,

(ii) a hydrophobic vinylic monomer,

(iii) a polyreactive crosslinking agent,

or (iv) a mixture of one or more (i), (ii) and (iii).

Preferably the macromer is of formula Ia.

In the foregoing perfluoropolyether portion Z of the macromer, a is preferably 1 or 2, and b is preferably 3 to 50. The definition of Z comprises block structures as well as alternating structures relating to different sub-groups having the index a. X is preferably $-CH_2-$ or $-CH_2(OCH_2CH_2)_y-$ where y is 1 or 2. A is preferably oxa.

Q is preferably -OCONH-R-NHCO- where R is a radical derived from diisocyanates including hexane-1,6-diisocyanate, trimethyl-hexane-1,6-diisocyanate, tetramethylene-diisocyanate, phenylene-1,4-diisocyanate, toluene-2,4-diisocyanate, toluene-2,6-diisocyanate, m- and p-tetramethylxylene-diisocyanate, isophorone-diisocyanate and cyclohexane-1,4-diisocyanate, and most preferably isophorone-diisocyanate, from which both NCO-Groups have been abstracted.

L is preferably a polyalkylether, $-O(C_mH_{2m}O)_nC_mH_{2m}O-$ where m is 2 or a mixture of 2 and 3, more preferably m is 2 and n is 10-50. Where m is a mixture of 2 and 3, the mixture contains a major proportion of subgroups where m is 2.

T is preferably $-CONH-R_5A-$ where $R_5$ is preferably ethylene and A is preferably oxa. Where T is $-CONH-R-NHCOOR_5A-$, R is preferably a radical derived from isophorone diisocyanate and $R_5$ is preferably ethylene.

E is preferably $-CO-C(R_1)=CHR_2$ where $R_1$ is preferably methyl and $R_2$ is preferably hydrogen. Where E is $-CONH-phenyl-C(R_1)=CHR_2$, $R_1$ and $R_2$ are preferably hydrogen. Where E is $-CONH-C(R_4)_2-phenyl-C-(R_1)=CHR_2$, $R_1$ is preferably methyl and $R_2$ is hydrogen.

Where G is present, x is preferably 1, and R is preferably a radical derived from isophorone diisocyanate.

Where La is present, A is preferably oxa, R is preferably a radical derived from isophorone diisocyanate, z is preferably 1 to 5 and preferably n equals na.

Preferred is a macromer of formula Ia wherein

E is $-CO-C(CH_3)=CH_2$,

T is $-CONH-CH_2CH_2-O-$,

L is $-O(C_2H_4O)_nC_2H_4O-$ where n is 19-25,

Q is -OCONH-isophorone-NHCO-,

X is $-CH_2-$, and

Z is $-CF_2O(C_2F_4O)_r-(CF_2O)_s-CF_2$ where

r:s is in the range of 1:10 to 5:1 and is preferably about 0.7.

The invention is further directed to a crosslinked homopolymerization product of a macromer E-T-L-Q-X-Z-X-Q-L-T-E or E-T-L-Q-X-G-X-Q-L-T-E wherein the variables are as hereinbefore defined. The invention is also directed to a crosslinked copolymerization product of the macromer E-T-L-Q-X-Z-X-Q-L-T-E and E-T-L-Q-X-Z-X-Q-L wherein the variables are as hereinbefore defined.

A further embodiment of the invention is a crosslinked homopolymerization product of a macromer E-T-L-Q-X-Z-X-Q-L-T-E wherein

E is $-CO-C(CH_3)=CH_2$,

T is $-CONH-CH_2CH_2-O-$,

L is $-O(C_2H_4O)_nC_2H_4O-$ where n is 19-25,

Q is -OCONH-isophorone-NHCO-,

X is $-CH_2-$, and

Z is $-CF_2O(C_2F_4O)_r-(CF_2O)_s-CF_2$ where

r:s is in the range of 1:10 to 5:1 and is preferably about 0.7.

In the crosslinked copolymerization product of a macromer E-T-L-Q-X-Z-X-Q-L-T-E and E-T-L-Q-X-Z-X-Q-L preferably greater than 1 % of the material is derived from the macromer E-T-L-Q-X-Z-X-Q-L-T-E, more preferably greater than 10 %, more preferred greater than 20 % and advantageously greater than 30 %.

This invention is further directed to an ophthalmic device made of the homopolymerization or copolymerization products mentioned hereinbefore, especially to contact lenses made therefrom. These contact lenses are preferably hydrogel contact lenses having greater than 20 % water content, more preferably greater than 30 %, even more preferred greater than 40 %, advantageously greater than 50 % water content. A preferred range of hydrogel water content is about 25 to about 50 % water content in its equilibrated state.

The vinylic macromonomers of formula I can be prepared by methods known, per se.

For example, the perfluoropolyalkylether/polyalkylether containing divinylic macromonomers of formula Ia can be prepared in a three-step sequential synthesis. In the first step, a perfluoropolyalkylether dialkanol of the formula

$$HOCH_2\text{-}(C_aF_{2a}O)_b\text{-}(CF_2)\text{-}CH_2OH$$

is reacted with two moles of a difunctional reactive agent, e.g. a diisocyanate of the formula OCN-R-NCO in the presence of a urethane catalyst to form the corresponding reactive group containing endcapped derivative

$$Z_1\text{-}(NCO)_2 \;,$$

where $Z_1$ is a moiety containing a perfluoropolyalkylether segment. In the second step, the resulting endcapped perfluoropolyalkylether derivative

$$Z_1\text{-}(NCO)_2$$

can then be reacted with two moles of a polyoxyalkylene diol of the formula HO-$(C_mH_{2m}O)_{n+1}$-H preferably in the presence of a conventional aprotic solvent at a temperature between about - 10 °C to about 100 °C, to form the corresponding polyalkylether-perfluoropolyalkylether-polyalkylether derivative of the formula $Z_1$[-NH-C(O)-O-$(C_mH_{2m}O)_{n+1}$-H$]_2$. In the third step, this triblock diol can be then reacted with two moles of reactive group containing vinylic monomer, wherein the reactive group is an isocyanate, say, of the formula O = C = N-(R-NHCOO$)_t$$R_5$A-C(O)C$R_1$ = CH$R_2$ wherein R, A, $R_1$, $R_2$ and $R_5$ are as above defined and t is 0 or 1, at a temperature between about -10 °C to about 100 °C in the presence of a conventional aprotic solvent, in the further presence or absence of a catalytic amount of urethane catalyst.

Materials comprising polymers of the formulas Ib and Id are formed by partial (or incomplete) capping in a reaction step. These materials are useful where post-polymerization modifications are performed such as tinting with reactive dyes.

Suitable aprotic solvents for conducting the reactions include formamide, N,N-dimethylformamide, phosphoric acid tri-dimethylamide, N-methyl-2-pyrrolidone, N,N-dimethylacetamide, acetamide, acetonitrile, acetone, tert-butyl acetate and preferably isopropyl acetate.

Suitable urethane catalysts include tertiary amines such as trimethylamine, triethylamine, N,N-dimethylbenzylamine, or an organo-metallic urethane catalyst, such as stannous octoate or dibutyltin dilaurate, or sodium acetate.

Alternatively the difunctional reactive agent can be an activated carboxy, such as anhydride, an acid halide, a carboxy ester or oxirane, or is a leaving group, such as halide, sulfato or the like. It is clear that reactants in the various steps of the synthesis be coreactive, e.g. if the perfluoropolyalkylether is terminated with an amine group, the reactive agent can contain an isocyanate, ester, acid halide, halide and the like. These coupling reactions are well known in the art.

The perfluoropolyalkylether starting materials are known and some are commercially available. They are described in U.S. Patent Numbers 3,810,874, 3,810,875, 3,847,978, 4,085,137, 4,094,911, 4,089,319 and 4,440,918 and European Patent Applications 084406 and 211237 and Japanese Patent Applications cited hereinbefore. Perfluoropolyalkylether dimethanols can be prepared by photooxidation of tetrafluoroethylene followed by cleavage and reduction reactions. Some of these are available from Ausimont, USA and are

known as Fomblin ZDOL derivatives such as Fomblin ZDOL 2000, Fomblin ZDEAL 2000 and Fomblin Z-DISOC with the respectives formulas being $Z\{CH_2OH)_2$, $Z\{COOCH_3)_2$, $Z\{CONH\text{-}C_6H_3(CH_3)NCO)]_2$ where Z is $CF_2O(C_2F_4O)_r\text{-}(CF_2O)_s\text{-}CF_2$ (r/s ~ 0.7). One can also chain extend these materials, for example the diols with diisocyanates, before use (see definition of G).

Difunctional (or multifunctional) reactive materials such as diisocyanate, diester, diepoxides and so on are known and many are commercially available.

The polyalkylether starting materials are also well known and many are commercially available (e.g. from Aldrich, Olin and Polysciences). Hydroxy terminated polyethylene glycols, average molecular weights 200-10,000 are available from Aldrich Chemical Company, Inc. USA. Amine-terminated polyethylene glycols are known and some are commercially available, for example, Jeffamine D-400 (Jefferson Chemical and Texaco).

It is also possible to use polyalkylether copolymers such as ethylene/propylene oxide polymeric diols where the more hydrophilic ethylene oxide is in major proportion. Many polymeric copolymeric diols are known and are described in U.S. Patent No. 4,780,488. These copolymers include poloxamers which are sold under the trade name Pluronic (BASF Wyandotte). One can also chain-extend the diols with, for example, diisocyanates before use (see definition of La).

In the third step of the reaction, the reactive vinylic group is introduced. Isocyanate terminated vinylic monomers are known and some are described in U.S. Patent No. 4,665,123. Some are commercially available such as 2-isocyanatoethyl methacrylate (Dow Corning, USA) and m-isopropenyl-2,2-dimethylbenzyl-isocyanate (m-TMI, Cyanamid). Epoxy terminated vinylic monomers, e.g. glycidyl methacrylate, are known and are commercially available.

It is also within the scope of the invention to prepare a macromer of formula I by endcapping

(a) $HOCH_2\text{-}(C_aF_{2a}O)_b\text{-}CF_2\text{-}CH_2OH$ where a is 1 to 4 and b is 2 to 200 with

(b)

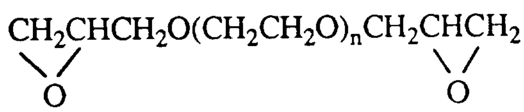

where n is 5 to 100 followed by reaction with

(c) 2-isocyanatoethyl methacrylate wherein the reactants a:b:c are in a 1:2:2 molar ratio.

The invention is further directed to a crosslinked homopolymerization product of such macromer, to an ophthalmic device therefrom, especially a contact lens made therefrom.

It is useful to add minor amounts i.e. up to about 10 % of vinylic comonomer to the composition, for example, to enhance tintability of the materials. These vinylic comonomers contain reactive groups such as hydroxyl, amine, oxirane and so forth. It is also useful to fine tune a particular physical property such as modulus, elongation, tensile strength, hydrophilicity or oxygen permeability by adding minor amounts of additional comonomers.

The vinylic comonomer may be hydrophilic, hydrophobic or may be a mixture of hydrophilic and hydrophobic vinylic monomers. Suitable vinylic monomers include those conventional vinylic monomers generally employed in the fabrication of soft and hard contact lenses. By a hydrophilic vinylic monomer is meant a monomer which, when polymerized by conventionel free radical polymerization, characteristically yields a polymer which either dissolves in water or is capable of absorbing at least 10 % by weight water under ambient equilibrium conditions. Similarly, suitable hydrophobic vinylic monomers are those monomers which, when polymerized by conventional free radical polymerization, characteristically yield a polymer which neither dissolves in water, nor is capable of absorbing at least 10 % by weight water under ambient (i.e. 20 ° C) equilibrium conditions.

The derivatives of formula I, in the absence or presence of vinylic comonomer, are advantageously polymerized in the presence of an inert diluent or solvent, such as a suitable organic solvent, including a lower alkanol, e.g. ethanol, methanol or the like, or an aprotic solvent such as N,N-dimethylformamide, acetamide, acetonitrile, N,N-dimethylacetamide, dimethyl sulfoxide, acetone, tert-butyl acetate, isopropyl acetate or mixture thereof. Also, aqueous/organic solvent systems may be employed.

The derivatives of formula I, in the absence or presence of a vinylic comonomer are polymerized in the presence of actinic radiation or in the presence of a conventional free radical initiator, such as a peroxide, e.g. di-tert-butyl peroxide, benzoyl peroxide, lauryl peroxide, decanoyl peroxide, acetyl peroxide, succinic acid peroxide, methyl ethyl ketone peroxide, 2,4-dichlorobenzoyl peroxide, isopropyl peroctoate, tert-butyl hydroperoxide, tert-butyl perpivalate, tert-butyl peroctoate, diisopropyl peroxydicarbonate, cumene

hydroperoxide, tert-butyl perbenzoate, tert-butyl peroxymaleic acid, tert-butyl peroxyacetate, and potassium persulfate, an azo compond, e.g. 2,2-azo-bis-isobutyronitrile, 2,2'-azo-bis-(2,4-dimethylvaleronitrile), 1,1'-azo-bis-(cyclohexane carbonitrile), 2,2'-azo-bis-(2,4-dimethyl-4-methoxyvaleronitrile) and phenyl-azo-isobutyronitrile, a photoinitiator, e.g. benzoin methyl ether and 1-hydroxycyclohexylphenyl ketone or actinic radiation such as UV light or ionizing rays e.g. gamma rays or X-rays.

The derivatives of formula I, in the absence or presence of a vinyl comonomer, are advantageously polymerized upon placement into a mold. The mold may be a conventional spin-casting mold for preparing contact lenses such as described in U.S. Patent No. 3,408,429, or a static mold, e.g. as described in U.S. Patent No. 4,347,198. Alternately, one may prepare a swollen lens blank, dry the lens blank to form the corresponding xerogel, shape the xerogel into a contact lens percurser by lathing methods known to the art, and swell the shaped xerogel in aqueous medium to form the corresponding contact lens, as described in Reissue U.S. Patent No. 27,401.

The solution of derivatives of formula I, in the absence or presence of a vinylic comonomer, is advantageously placed into a mold in the shape of a contact lens and polymerized. After polymerization, the crosslinked polymer is equilibrated in aqueous or aqueous saline solution. Optimally this post treatment further includes a heat treatment of the molded lens shaped polymer. Such heat treatment is characteristically conducted at a temperature between about 60 and 100 °C, e.g. in the presence of an aqueous medium. The treatment can vary greatly, but usually is accomplished in about 5 to 90 minutes. The purpose of this post treatment is to dimensionally stabilize the crosslinked contact lens material. Also, the treatment may further serve to sterilize such lens material.

Suitable vinylic comonomers for polymerization with the derivative of formula I include conventional hydrophobic and hydrophilic monomers. Suitable hydrophobic monomers include, without limitation, $C_1$ to $C_{18}$ alkyl acrylates and methacrylates, $C_3$ to $C_{18}$ alkyl acrylamides and methacrylamides, acrylonitrile, methacrylonitrile, vinyl $C_1$ to $C_{18}$ alkanoates, $C_2$ to $C_{18}$ alkenes, $C_2$ to $C_{18}$ haloalkenes, styrene, $C_1$ to $C_6$ alkyl styrenes, vinyl alkyl ethers wherein the alkyl portion has 1 to 6 carbon atoms, $C_3$-$C_{12}$ perfluoroalkyl ethyl thiocarbonylaminoethyl acrylates and methacrylates, $C_3$-$C_{12}$ fluoroalkyl acrylates and methacrylates, acryloxy and methacryloxy-alkyl-siloxanes, N-vinylcarbazole, $C_1$-$C_{12}$ alkyl esters of maleic, fumaric, itaconic, and mesaconic acids and the like. Examples of suitable hydrophobic monomers include methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidine chloride, acrylonitrile, 1-butene, butadiene, methacrylonitrile, vinyl toluene, vinyl ethyl ether, perfluorohexylethylthiocarbonylaminoethyl methacrylate, isobornyl methacrylate, hexafluorobutyl methacrylate, 3-methacryloxypropylpentamethyldisiloxane, and bis-(methacryloxypropyl) tetramethyldisiloxane.

Suitable hydrophilic monomers include, without limitation, hydroxy substituted lower alkyl acrylates and methacrylates, acrylamide, methacrylamide, $C_1$-$C_2$ lower alkyl acrylamide and methacrylamide, ethoxylated acrylates and methacrylates, hydroxy substituted lower alkyl acrylamide and methacrylamide, hydroxy substituted lower alkyl vinyl ethers, sodium ethylene sulfonate, sodium styrenesulfonate, 2-acrylamido-2-methylpropanesulfonic acid, N-vinylpyrrole, N-vinylsuccinimide, N-vinylpyrrolidone, 2- and 4-vinylpyridine, acrylic acid, methacrylic acid, amino (by amino including quaternary ammonium), -monolower-alkylamino- or diloweralkylamino-lower alkyl acrylates or methacrylates, allyl alcohol, and the like.

Specific hydrophilic monomers include hydroxyethyl methacrylate, hydroxyethyl acrylate, acrylamide, methacrylamide, N,N-dimethylacrylamide, allyl alcohol, vinylpyridine, N-vinylpyrrolidone, glycerol methacrylate, N-(1,1-dimethyl-3-oxobutyl) acrylamide, and the like.

Preferred hydrophobic comonomers are methyl methacrylate and glycidyl methacrylate.

Preferred hydrophilic monomers are 2-hydroxyethyl methacrylate, N-vinyl pyrrolidone, and dimethylacrylamide.

Optionally, an additional conventional polyreactive crosslinking agent may be added, such as, allyl compounds e.g. allyl methacrylate, diallyl itaconate, monoallyl itaconate, diallyl maleate, diallyl fumarate, diallyl succinate, diallyl phthalate, triallyl cyanurate, triallyl isocyanurate, diethylene glycol bis-allyl carbonate, triallyl phosphate, triallyl trimellitate, allyl ether, N,N-diallylmelamine; vinyl compounds, e.g. divinyl benzene, N,N'-methylene-bis acrylamide, ethylene glycol dimethacrylate, neopentylglycol dimethacrylate, tetraethylene glycol dimethacrylate, hexamethylene-bis-maleimide,divinyl urea, bisphenol A bis methacrylate, divinyl adipate, glycerin trimethacrylate, trimethylolpropane triacrylate, trivinyl trimellitate, 1,5-pentadiene, 1,3-bis(4-methacryloxybutyl) tetramethyl disiloxane, divinyl ether and divinyl sulfone; hydroxyl reactive compounds such as: polyvalent isocyanates e.g. hexamethylene diisocyanate, isophorone diisocyanate, toluene diisocyanate; polyaldehydes e.g. glutaraldehyde and glyoxal; polyacids e.g. glutaric acid and oxalic acid; polyepoxides e.g. butane diepoxide, vinylcyclohexene dioxide and butanediol

diglycidyl ether; polyols (acid catalysis) e.g. dimethylol urea and diethylene glycol. Also the dimethacrylate formed by reacting perfluoropolyalkylether dimethanol or poly(ethylene glycol) with two moles of isocyanatoethyl methacrylate can be used.

When employed, about 0.01 to 10 weight percent of crosslinking agent, based upon the weight of formula I derivative, may be present, preferably about 0.01 to about 5 percent, most preferably about less than 2 weight percent.

The resultant contact lenses are optically clear, strong, flexible, highly oxygen permeable and wettable. Further, the instant lenses are characterized by their ease of manufacture.

In the following examples, all parts are by weight unless otherwise described.

A description of testing methods used on the polymer films is as follows: Oxygen permeability (DK) is determined from measurements on a Schema Versatae or Createch polarographic cell. Wettability or lubricity is evaluated by a feel comparison to crosslinked polyHEMA (i.e. polymerized 2-hydroxyethyl methacrylate + 1 % ethylene glycol dimethacrylate). The surface lubricity of polyHEMA is designated (B); more wettable than polyHEMA is designated (A) and a less wettable surface than polyHEMA is designated (C). Tensile strength is qualitatively evaluated by pulling on a sheet of the material by hand and then comparing the result to a material previously evaluated by a micromechanical tester to be 14 kg/cm$^2$. A measurement found to be similar to this "standard" is designated (2); a higher value is designated (1); a lower value is designated (3); while a much lower value is designated (4).

Example 1: This example illustrates the sequential synthesis of the perfluoropolyether/polyether urethane-linked adduct,

$$Z_1\text{-(IPDI-PEG-IEM)}_2 ,$$

where $Z_1$ is a perfluoropolyether, IPDI is isophorone diisocyanate, PEG is a polyethylene glycol and IEM is 2-isocyanatoethyl methacrylate; and the solution polymerization of this adduct.

## Synthesis of $Z_1\text{-(IPDI-PEG)}_2$ Diadduct:

30.06 g (0.0136 mole) Fomblin ZDOL 2000 (MW 2200; Montedison, Ausimont) is combined with 6.07 g (0.02734 mole) IPDI and 10 µl dibultyltin dilaurate, mixed well and stirred overnight at room temperature forming

$$Z_1\text{-(IPDI)}_2 .$$

The percentage of isocyanate reacted (generally 48-54 %) is determined by dibutylamine titration and varies with the precise value of the $Z_1$ molecular weight actually used. Then, the calculated molar amount of PEG is added to a solution (solvent, 30-70 %) of

$$Z_1\text{-(IPDI)}_2$$

to form

$$Z_1\text{-(IPDI-PEG)}_2.$$

Then a urethane catalyst, i.e. dibutyltin dilaurate (0.66 ml per gram of solute) is added and the solution allowed to react at 50 °C with stirring overnight (complete disappearance of isocyanate IR absorption at 2270 cm$^{-1}$).

## Synthesis of $Z_1\text{-(IPDI-PEG-IEM)}_2$ Diadduct:

The calculated molar amount of IEM is added, with rapid stirring, to a solution of

$$Z_1 \leftarrow IPDI\text{-}PEG)_2$$

and reacted at 40-50 °C (see example 2 samples 1-3) or at room temperature (see example 2 sample 5 and 6).

Polymerization of Diadduct: Hydrogel Formation: The

$$Z_1 \leftarrow IPDI\text{-}PEG\text{-}IEM)_2$$

adduct in a solvent is mixed with initiator (benzoin methyl ether, BME), poured into flat "sandwich" molds and polymerized with UV light (Sylvania, Blacklight Blue, 15 W) at room temperature for 3 hours. The polymerized films are removed from the molds, extracted in water several times, heated in boiling water for 10 minutes and then allowed to equilibrate in room temperature water(generally overnight).

Example 2: This example shows the resultant water content and oxygen permeability values of perfluoropolyalkylether/PEG hydrogels, i.e. crosslinked

$$Z_1 \leftarrow IPDI\text{-}PEG\text{-}IEM)_2 ,$$

solution polymerized using different molecular weights of PEG (400, 600) in various amounts of solvent (acetone).

| Sample | Wt. % In the Polymerization Mixture | | | | | | Wt.% BME | % $H_2O$ Content | DK (barrer) |
|---|---|---|---|---|---|---|---|---|---|
| | $Z_1$ | IPDI | PEG | (MW) | IEM | Acetone | | | |
| 1 | 39.2 | 7.9 | 14.3 | (400) | 5.5 | 33.0 | 0.1 | 14.5 | 67.0 |
| 2 | 20.3 | 4.1 | 7.4 | (400) | 2.9 | 65.3 | 0.2 | 28.9 | 68.4 |
| 3 | 34.7 | 7.1 | 19.0 | (600) | 4.9 | 34.3 | 0.04 | 29.2 | 46.2 |
| 4 | 31.6 | 6.4 | 17.4 | (600) | 4.5 | 40.1 | 0.3 | 37.3 | 51.6 |
| 5 | 26.0 | 5.3 | 14.3 | (600) | 3.7 | 50.8 | 0.3 | 36.9 | 53.0 |
| 6 | 16.1 | 3.3 | 8.9 | (600) | 2.3 | 69.5 | 0.4 | 49.2 | 51.5 |

As shown above, water content increases with higher molecular weight PEG and reaction solvent content. The oxygen permeability, however, decreases with the higher molecular weight PEG.

Example 3: This example illustrates a range of $Z_1$/PEG hydrogel water contents obtained by varying the molecular weight of the PEG and the proportion of solvent IPAC (isopropyl acetate). Films are made as in example 1 except that the molecular weight of the PEG is 600, 900, 1000 or 1500 and the solvent used is isopropyl acetate. IEM is reacted at 40-50 °C for all samples.

| Sample | Wt.% In the Polymerization Mixture | | | | | | Wt.% BME | % $H_2O$ Content |
|---|---|---|---|---|---|---|---|---|
| | $Z_1$ | IPDI | PEG | (MW) | IEM | IPAC | | |
| 1 | 35.3 | 7.2 | 19.3 | (600) | 5.0 | 33.2 | 0.06 | 21.9 |
| 2 | 27.1 | 5.5 | 14.8 | (600) | 3.8 | 48.8 | 0.06 | 31.2 |
| 3 | 20.8 | 4.2 | 11.3 | (600) | 2.9 | 60.8 | 0.04 | 45.8 |
| 4 | 29.4 | 5.9 | 24.0 | (900) | 4.1 | 36.6 | 0.05 | 39.5 |
| 5 | 25.2 | 5.1 | 20.6 | (900) | 3.6 | 45.7 | 0.04 | 40.7 |
| 6 | 20.9 | 4.2 | 17.1 | (900) | 3.0 | 54.8 | 0.05 | 42.8 |
| 7 | 27.3 | 5.5 | 24.9 | (1000) | 3.9 | 38.4 | 0.05 | 42.9 |
| 8 | 23.8 | 4.8 | 21.7 | (1000) | 3.4 | 46.3 | 0.05 | 45.1 |
| 9 | 22.0 | 4.4 | 20.0 | (1000) | 3.3 | 47.7 | 0.05 | 45.0 |
| 10 | 20.2 | 4.1 | 18.3 | (1000) | 2.8 | 54.6 | 0.03 | 48.1 |
| 11 | 15.9 | 3.2 | 14.5 | (1000) | 2.2 | 64.2 | 0.05 | 54.2 |
| 12 | 13.9 | 2.8 | 12.6 | (1000) | 2.0 | 68.7 | 0.04 | 52.9 |
| 13 | 18.9 | 3.9 | 25.9 | (1500) | 2.7 | 48.6 | 0.05 | 57.9 |
| 14 | 16.5 | 3.4 | 22.6 | (1500) | 2.3 | 55.2 | 0.06 | 61.1 |
| 15 | 14.7 | 3.1 | 20.1 | (1500) | 2.1 | 60.1 | 0.07 | 61.5 |

As shown above water content increases with increasing molecular weight PEG and solvent content.

Example 4: This example shows the effect of hydrophilic comonomer addition on the physical properties of $Z_1$/PEG hydrogel films. Films are made as in example 3 except that the comonomer N,N-dimethylacrylamide (DMA), N-vinylpyrrolidone (NVP) or 2-hydroxyethyl methacrylate (HEMA) is added just prior to the addition of initiator.

| Sample | Wt.% In the Polymerization Mixture | | | | | | | | |
|---|---|---|---|---|---|---|---|---|---|
| | $Z_1$ | IPDI | PEG | (MW) | IEM | Comonomer | | IPAC | % BME |
| 1 | 24.4 | 4.9 | 19.9 | (900) | 3.4 | 17.1 | DMA | 30.3 | 0.05 |
| 2 | 24.5 | 4.9 | 20.0 | (900) | 3.5 | 16.7 | NVP | 30.4 | 0.05 |
| 3 | 24.5 | 4.9 | 20.0 | (900) | 3.5 | 16.6 | HEMA | 30.5 | 0.05 |
| 4 | 29.4 | 5.9 | 24.0 | (900) | 4.1 | - | | 36.6 | 0.05 |
| 5 | 24.8 | 5.0 | 22.6 | (1000) | 3.5 | 9.1 | DMA | 35.0 | 0.05 |
| 6 | 22.8 | 4.6 | 20.7 | (1000) | 3.2 | 16.6 | DMA | 32.1 | 0.05 |
| 7 | 21.0 | 4.3 | 19.1 | (1000) | 3.0 | 9.5 | DMA | 43.1 | 0.06 |
| 8 | 19.2 | 3.9 | 17.5 | (1000) | 2.7 | 17.4 | DMA | 39.4 | 0.05 |
| 9 | 24.8 | 5.0 | 22.6 | (1000) | 3.5 | 9.2 | NVP | 34.9 | 0.05 |
| 10 | 22.7 | 4.6 | 20.7 | (1000) | 3.2 | 16.8 | NVP | 32.0 | 0.05 |
| 11 | 21.1 | 4.3 | 19.2 | (1000) | 3.0 | 9.0 | NVP | 43.4 | 0.04 |
| 12 | 19.2 | 3.9 | 17.4 | (1000) | 2.7 | 17.5 | NVP | 39.3 | 0.05 |
| 13 | 24.8 | 5.0 | 22.6 | (1000) | 3.5 | 9.1 | HEMA | 35.0 | 0.05 |
| 14 | 22.8 | 4.6 | 20.7 | (1000) | 3.2 | 16.6 | HEMA | 32.1 | 0.05 |
| 15 | 21.0 | 4.2 | 19.0 | (1000) | 3.0 | 9.8 | HEMA | 43.0 | 0.05 |
| 16 | 19.2 | 3.9 | 17.5 | (1000) | 2.7 | 17.4 | HEMA | 39.4 | 0.05 |
| 17 | 27.3 | 5.5 | 24.9 | (1000) | 3.9 | - | | 38.4 | 0.05 |
| 18 | 15.7 | 3.3 | 21.5 | (1500) | 2.2 | 16.8 | DMA | 40.5 | 0.05 |
| 19 | 15.7 | 3.3 | 21.5 | (1500) | 2.2 | 16.8 | NVP | 40.5 | 0.05 |
| 20 | 15.4 | 3.2 | 21.5 | (1500) | 2.2 | 18.9 | HEMA | 39.8 | 0.06 |
| 21 | 18.9 | 3.9 | 25.9 | (1500) | 2.7 | - | | 48.6 | 0.05 |

| Physical Properties of Hydrogel | | | | |
|---|---|---|---|---|
| Sample | % $H_2O$ Content | Clarity | Wettability | Strength |
| 1 | 54.4 | Clear | A | 3 |
| 2 | 48.8 | Clear | A | 3 |
| 3 | 37.1 | Clear | A | 2 |
| 4 | 39.5 | Clear | A | 2 |
| 5 | 52.6 | Clear | A | 3 |
| 6 | 57.1 | Clear | A | 3 |
| 7 | 54.4 | Clear | A | 3 |
| 8 | 60.1 | Clear | A | 3-4 |
| 9 | 48.6 | Clear | A | 3 |
| 10 | 54.7 | Hazy | A | 4 |
| 11 | 49.7 | Clear | A | 3 |
| 12 | 52.3 | Clear | A | 4 |
| 13 | 42.7 | Clear | A | 3 |
| 14 | 40.0 | Clear | A | 3 |
| 15 | 44.9 | Sl. Hazy | A | 3 |
| 16 | 44.8 | Sl. Hazy | A | 3 |
| 17 | 42.9 | Clear | A | 3 |
| 18 | 69.6 | Clear | A | 3 |
| 19 | 63.2 | Clear | A | 3-4 |
| 20 | 55.8 | Hazy | A | 2 |
| 21 | 57.9 | Clear | A | 3 |

As shown above, addition of hydrophilic comonomers has little effect on wettability or tensile strength.

Example 5: This example compares the effect of initiator level on the physical properties of similar composition $Z_1$/PEG hydrogel films. The films are prepared in a similar manner to that in example 1.

In general, 3.00 g (0.0016 mole) Fomblin ZDOL 2000, MW 1851 (previously bubbled with nitrogen for 2 hours while stored over molecular sieves) is combined with 0.72 g (0.0032 mole) IPDI and 2.5 µl dibutyltin dilaurate (DBTL) catalyst under nitrogen, mixed well and stirred overnight at room temperature. The percentage of isocyanate reacted is determined by titration to be 48-53 %. PEG 1000 is reacted with

$$Z_1 \leftarrow IPDI)_2$$

in the presence of solvent (approximately 38 % by weight isopropyl acetate, IPAC). Then 0.66 µl DBTL is added per gram solute and the solution reacted at 50 °C with stirring overnight under nitrogen. The calculated equimolar amount of IEM is added, with rapid stirring, to a solution of

$$Z_1 \leftarrow IPDI\text{-}PEG)_2 \ .$$

The solution is cooled to room temperature and initiator (BME) added. The solution is centrifuged five minutes (Eppendorf 5412) poured into "sandwich" molds and UV irridated at room temperature for three hours. After water extraction, strength and wettability testing is performed.

| Sample | Wt. % In the Polymerization Mixture | | | | | | Hydrogel % $H_2O$ Content |
|---|---|---|---|---|---|---|---|
| | $Z_1$ | IPDI | PEG | IEM | IPAC | % BME | |
| 1 | 24.8 | 5.9 | 26.8 | 4.2 | 38.4 | 0.05 | 36.7 |
| 2 | 24.6 | 5.9 | 26.7 | 4.2 | 38.7 | 0.05 | 47.9 |
| 3 | 25.9 | 5.8 | 25.9 | 4.0 | 38.4 | 0.1 | 46.3 |
| 4 | 24.8 | 6.0 | 26.8 | 4.1 | 38.3 | 0.1 | 47.5 |
| 5 | 24.7 | 6.0 | 26.8 | 4.2 | 38.4 | 0.1 | 50.4 |
| 6 | 25.9 | 5.8 | 25.9 | 4.0 | 38.4 | 0.2 | 48.4 |
| 7 | 24.8 | 6.0 | 26.8 | 4.1 | 38.3 | 0.2 | 51.3 |
| 8 | 25.9 | 5.8 | 25.9 | 4.0 | 38.4 | 0.5 | 48.8 |

All hydrogels are clear. The wettability is (A) for samples 2, 4, 5, 7 and 8 and (B) for samples 1, 3 and 6. The strength is (2) for samples 1, 3, 6 and 8, (3) for samples 4, 5 and 7 and (4) for sample 2. As shown above, increasing initiator level from 0.05 to 0.1 % and higher appears to improve property reproducibility especially water content and strength; but no added strength is found by further increasing initiator level to 0.5 %.

Example 6: This example illustrates the effect of various crosslinking agents on the physical properties of perfluoropolyether/PEG hydrogel films. The crosslinkers used are: a dimethacrylate of PEG 600, a dimethacrylate of ZDOL 1000 and ethylene glycol dimethacrylate.

The dimethacrylate of PEG 600 is synthesized by combining 2.425 g (0.004 mole) PEG 600 with 1.2578 g (0.008 mole) IEM, mixing well and adding 2 µl DBTL and stirring overnight at room themperature. Reaction completion is indicated by disappearance of isocyanate IR absorption at 2270 $cm^{-1}$.

The dimethacrylate of ZDOL 1000,

$$Z_1(IEM)_2\ ,$$

is synthesized by combining 1.1115 g (0.00085 mole) Fomblin ZDOL 1000 (MW 1301) with 0.2652 g (0.0017 mole) IEM, mixing well and then adding 2 µl DBTL and stirring for three hours at room temperature. Disappearance of the isocyanate IR absorption is used to monitor reaction completion. Ethylene glycol dimethacrylate (EGDMA) is distilled from a commercial source (Sartomer) before use.

| Sample | Wt.% In the Polymerization Mixture | | | | | | | Hydrogel % $H_2O$ Content |
|---|---|---|---|---|---|---|---|---|
| | $Z_1$ | IPDI | PEG 1000 | IEM | IPAC | Comonomer | % BME | |
| 1 | 22.4 | 5.4 | 24.3 | 3.8 | 34.8 | 9.3 PEG 600$(IEM)_2$ | 0.1 | 49.8 |
| 2 | 19.9 | 4.8 | 22.4 | 3.5 | 36.2 | 13.1 PEG 600$(IEM)_2$ | 0.1 | 48.3 |
| 3 | 20.7 | 4.9 | 22.3 | 3.5 | 35.4 | 13.2 PEG 600$(IEM)_2$ | 0.09 | 48.6 |
| 4 | 24.4 | 5.9 | 26.4 | 4.1 | 38.1 | 1.1 EGDMA | 0.1 | 45.3 |
| 5 | 24.5 | 5.9 | 26.4 | 4.1 | 38.1 | 1.0 ZDOL 1000$(IEM)_2$ | 0.1 | 53.6 |
| 6 | 24.7 | 5.9 | 26.7 | 4.2 | 38.5 | 1.0 ZDOL 1000$(IEM)_2$ | 0.1 | 46.7 |

PEG 600$(IEM)_2$ = PEG 600 terminated with 2 equ. IEM
EGDMA = ethylene glycol dimethacrylate;
ZDOL 1000$(IEM)_2$ = ZDOL 1000 terminated with 2 equ. IEM as described in this example.

All hydrogels are clear. The wettability is (B) for sample 4 and (A) for the remaining samples. The strength is (2-3) for sample 5, (3) for samples 1, 4 and 6 and (4) for samples 2 and 3.

Example 7: This example shows the physical properties of perfluoropolyether/PEG hydrogel films made by combining the diadducts of

$$Z_1(IPDI\text{-}PEG\text{-}IEM)_2$$

which have different PEGs, but the same $Z_1$ (i.e. ZDOL 2000). The PEGs used are 400, 600 and 1000. The reaction solutions are prepared in isopropyl acetate as in example 5 except that nitrogen degassing is not used. The solutions are mixed in various ratios just prior to initiator (BME) addition.

Wt. % In the Polymerization Mixtures

| Sample | Mole Ratio $Z_1$-(IPDI-PEG-IEM$)_2$ | $Z_1$ | IPDI | PEG (MW) | IEM | IPAC | % BME | Hydrogel % $H_2O$ Content |
|---|---|---|---|---|---|---|---|---|
| 1 | 1 PEG 1000/1 PEG 600 | 27.1 | 6.5 | 14.8 (1000)<br>8.7 (600) | 4.6 | 38.3 | 0.05 | 39.0 |
| 2 | 3 PEG 1000/1 PEG 600 | 25.9 | 6.2 | 21.1 (1000)<br>4.1 (600) | 4.3 | 38.4 | 0.06 | 42.4 |
| 3 | 1 PEG 1000/1 PEG 400 | 28.6 | 6.5 | 15.6 (1000)<br>6.1 (400) | 4.8 | 38.3 | 0.05 | 35.0 |
| 4 | 3 PEG 1000/1 PEG 400 | 26.5 | 6.4 | 21.2 (1000)<br>2.9 (400) | 4.5 | 38.3 | 0.05 | 40.9 |
| 5 | PEG 1000 | 24.7 | 5.9 | 26.7 (1000) | 4.2 | 38.5 | 0.1 | 46.7 |

All hydrogels are clear, have an (A) wettablility and a (3) strength.

The results show that though the water content of a

$$Z_1\text{-(IPDI-PEG 1000-IEM)}_2$$

film is lowered slightly by the copolymerization with

$$Z_1\text{-(IPDI-PEG 400-IEM)}_2$$

or

$$Z_1\text{-(IPDI-PEG 600-IEM)}_2,$$

the clarity, wettability and strength appear the same.

Example 8: This example shows the effect of a lower molecular weight (i.e. approximately 1000 as opposed to approximately 2000) perfluoropolyether on the properties of a $Z_1$/PEG hydrogel. The synthesis of these

$$Z_1\text{-(IPDI-PEG-IEM)}_2$$

diadducts is similar to that described in example 3. More specifically, 5.0082 g (0.0038 mole) Fomblin ZDOL 1000 (MW 1301) is reacted with 1.7121 g (0.0077 mole) IPDI in solvent (20 % isopropyl acetate) while stirring at room temperature overnight in the presence of 2 µl DBTL; some samples (i.e. sample numbers 3, 5 and 6) are reacted without solvent. The

$$Z_1 \{ IPDI)_2$$

diadduct is then reacted with 2 moles of PEG (i.e. 200, 400, 600, 900 or 1000). The PEG is first dissolved in a certain quantity of isopropyl acetate (the weight of solvent calculated to be 40 % of the final reaction mixture) at 50 °C (PEG 600, 900, 1000) or at room temperature (PEG 200, 400).

In sample 1 for example, 0.2211 g (0.0011 mole) PEG 200 is dissolved in 0.5692 g IPAC then 1.2098 g of the

$$Z_1 \{ IPDI)_2$$

adduct is added, the mixture mixed well followed by the addition of 0.78 µl DBTL and stirring overnight at 50 °C. The solution is then cooled to room temperature, 0.1714 g (0.0011 mole) IEM added and the mixture reacted with stirring at room temperature overnight. Addition of initiator (BME), polymerization and water equilibration are similar to that described in example 1.

| Sample | MW PEG | % BME | Physical Properties of Hydrogel | | |
|---|---|---|---|---|---|
| | | | Content % $H_2O$ | Oxygen Permeability (barrer) | Observation |
| 1 | 200 | 0.48 | 5.92 | 25.3 | very slightly hazy on edges; wettability = B |
| 2 | 400 | 0.49 | 19.48 | 24.0 | clear; wettability = B |
| 3 | 600 | 0.06 | 34.29 | 20.8 | clear; yellow edges; |
| 4 | 900 | 0.51 | 47.66 | 25.9 | wettability = A clear; wettability = A |
| 5 | 1000 | 0.07 | 50.28 | 22.9 | clear; wettability = A |
| 6 | 1000 | 0.48 | 51.50 | - | clear; wettability = A |

As shown above, water content and wettability increase with increasing molecular weight of PEG.

Example 9: This example shows the effect of PEG molecular weight and solvent content (isopropyl acetate) on various physical properties if perfluoropolyether/polyether hydrogels obtained using Fomblin ZDOL TX 2000 ($Z_1$ TX, MW 2288) a perfluoropolyether with an additional 1 or 2 ethylene oxide units adducted to the terminal hydrogel groups of ZDOL 2000.

Films are made in a similar manner to those described in example 3. The reaction of $Z_1$TX and two moles of IPDI is monitored by isocyanate titration and the percent isocyanate reacted is found to be approximately 50 % (47-52 %). The product, $Z_1TX\{IPDI\text{-}PEG\text{-}IEM)_2$ is formed through the reaction of two moles of IEM with $Z_1TX\{IPDI\text{-}PEG\text{-})_2$ adduct in IPAC at room temperature overnight.

As shown in the table below, in general, use of the perfluoropolyether $Z_1$TX yields strong clear films whose percent water content increases with PEG molecular weight and solvent content.

| Sample | MW PEG | % IPAC In the Polymerization Mixture | Physical Properties of Hydrogel | | | |
|---|---|---|---|---|---|---|
| | | | % $H_2O$ Content | Clarity/Wettability/Strength | | |
| 1 | 400 | 28 | 16 | Clear | A | 2 |
| 2 | 400 | 39 | 17 | Clear | B | 1 |
| 3 | 400 | 48 | 21 | Hazy | B | 2 |
| 4 | 400 | 66 | 28 | Cloudy | B | 2 |
| 5 | 600 | 38 | 29 | Clear | A | 1 |
| 6 | 600 | 50 | 30 | Sl. hazy | A | 2 |
| 7 | 600 | 59 | 39 | Hazy | B | 3 |
| 8 | 900 | 29 | 39 | Clear | A | 4 |
| 9 | 900 | 40 | 40 | Clear | A | 1 |
| 10 | 900 | 50 | 43 | Clear | A | 1 |
| 11 | 900 | 58 | 47 | Clear | A | 1 |
| 12 | 1000 | 28 | 47 | Clear | A | 1 |
| 13 | 1000 | 38 | 42 | Clear | A | 1 |
| 14 | 1000 | 38 | 40 | Clear | A | 2 |
| 15 | 1000 | 49 | 43 | Clear | A | 1 |
| 16 | 1000 | 59 | 47 | Sl. Hazy | A | 4 |
| 17 | 1500 | 39 | 55 | Clear | A | 2 |
| 18 | 1500 | 39 | 56 | Clear | A | 3 |
| 19 | 1500 | 49 | 57 | Clear | A | 2 |
| 20 | 1500 | 59 | 60 | Clear | A | 1 |

Example 10: This example shows the synthesis of a perfluoropolyether/polyether hydrogel in which the urethane group linking the perfluoropolyether chain and polyether chain (reaction with IPDI) is replaced by an ether linkage; this is accomplished by using an epoxy-terminated PEG.

More specifically, 2.1091 g (0.00096 mole) Fomblin ZDOL 2000 (MW 2200) is reacted at 60 °C overnight with 0.7749 g (0.00194 mole) polyethylene glycol 400 diglycidyl ether (PEG 400, Polysciences), using 0.0167 g triethylamine catalyst. After 16 hours, the temperature of the mixture (opaque) is raised to 70 °C, 0.0220 g triethylamine added and the mixture stirred overnight leading to a clear, yellow, viscous product,

$$Z_1(O-PEG\ 400)_2\ .$$

Then 0.5213 g (0.00017 mole) of

$$Z_1(O-PEG\ 400)_2$$

is combined with 1.8890 g dimethyl sulfoxide, DMSO, (Aldrich Gold Label, 99.9 %) and 0.0539 g (0.00035 mole) IEM which is added dropwise to the rapidly stirring mixture. The solution is reacted at room temperature approximately 72 hours. Then 0.0040 g BME is added and the solution poured into a "sandwich" mold and UV irradiated at room temperature for 13 hours resulting in a soft gel. This material after equilibration in water becomes a clear hydrogel film.

Example 11: This example shows the fabrication of prototype perfluoropolyether/polyether lenses from polypropylene contact lens molds. The reaction solution is made as in example 5 (samples 3-5) using 0.1 % BME as initiator. The solution is pipetted into the lens molds and UV cured for 3 hours. After water extraction and boiling, one obtains optically clear, strong lenses. Micromechanical tensile tests performed on the lenses yield the following properties: stress of 3.6 $kg/cm^2$, Young's modulus of 26 $kg/cm^2$ and a 13 % elongation.

Example 12: This example illustrates the preparation of hydrogels obtained via polymerization of partially IEM capped

$$Z_1(IPDI\text{-}PEG\ 1000)_2$$

adduct ($Z_1$ Adduct). The incompletely capped adduct, i.e. mixtures of PEG-IPDI-$Z_1$-IPDI-PEG-IEM and IEM-PEG-IPDI-$Z_1$-IPDI-PEG-IEM, is prepared as in example 1 except that 50 %-90 % of the amount of IEM is added to partially react the PEG 1000 hydroxyl groups. The adducts are then polymerized with or without comonomer (DMA, HEMA, NVP) into sheets (samples 1-5) or lenses (samples 6-8) using UV irradiation (3 hours, 0.05 % BME initiator) and water equilibration. Sample 8 is control.

| Sample | Polymerization Mixture | | | |
|---|---|---|---|---|
| | $Z_1$:IPDI:PEG:IEM Molar Ratio | % $Z_1$ Adduct | % IPAC | % Comonomers |
| 1 | 1:2:2:1 | 61.9 | 38.1 | - |
| 2 | 1:2:2:1 | 54.6 | 45.4 | - |
| 3 | 1:2:2:1 | 49.6 | 41.2 | 9.2 DMA |
| 4 | 1:2:2:1 | 49.6 | 41.2 | 9.2 HEMA |
| 5 | 1:2:2:1 | 49.7 | 41.2 | 9.1 NVP |
| 6 | 1:2:2:1.5 | 66.3 | 33.7 | - |
| 7 | 1:2:2:1.8 | 61.1 | 38.9 | - |
| 8 | 1:2:2:2 | 61.6 | 38.4 | - |

| Sample | Physical Properties of Hydrogel | | |
|---|---|---|---|
| | % $H_2O$ Content | Clarity | Wettability |
| 1 | 54.7 | Clear | A |
| 2 | 64.1 | Clear | A |
| 3 | 68.7 | Clear | A |
| 4 | 55.7 | Hazy | A |
| 5 | 58.3 | Clear | A |
| 6 | 52.9 | Clear | A |
| 7 | 52.7 | Clear | A |
| 8 | 48.7 | Clear | A |

Example 13: This example illustrates the preparation and physical properties of the hydrogels obtained when various amounts of the

$$Z_1(IPDI\text{-}PEG\text{-}IEM)_2$$

diadduct ($Z_1$ Diadduct) are copolymerized with the reaction product (RP Adduct) of

$$Z_1(IPDI\text{-}PEG)_2$$

and an equal molar amount of IEM. The

$$Z_1(IPDI\text{-}PEG\text{-}IEM)_2$$

diadduct is prepared as in example 1 using 37.4 % IPAC as solvent. The RP Adduct is also prepared as in example 1 with 38.1 % IPAC except that 50 % of the amount of IEM is added. These materials, i.e. $Z_1$ Diadduct and RP Adduct in IPAC are combined in various ratios and UV polymerized (3 hours, 0.05 % BME initiator) into sheets.

| Sample | Polymerization Mixture | | % $H_2O$ Content of Hydrogel |
|---|---|---|---|
| | % RP Adduct | % $Z_1$ Diadduct | |
| 1 | 85.4 | 14.6 | 53.01 |
| 2 | 84.6 | 15.4 | 52.08 |
| 3 | 50.0 | 50.0 | 44.39 |
| 4 | 50.0 | 50.0 | 48.01 |
| 5 | 14.8 | 85.2 | 44.16 |
| 6 | 100.0 | - | 54.71 |
| 7 | - | 100.0 | 44.45 |

All hydrogels are clear and have an (A) wettability. The strength is (3-4) for sample 1, (3) for samples 3, 4, 5 and 7 and (4) for samples 2 and 6.

As shown above, water content tends to increase with increasing RP Adduct content.

Example 14: This example illustrates the tensile strength of lenses polymerized from the

$$Z_1\text{-(IPDI-PEG 1000-IEM)}_2$$

diadduct ($Z_1$ Diadduct) with or without additional comonomer adducts. The

$$Z_1\text{-(IPDI-PEG 1000-IEM)}_2$$

diadduct is prepared as in example 1. The comonomers used are prepared by reaction of 1 mole $Z_1$ with one mole IEM ($Z_1$/IEM) or two moles

$$\text{IEM } (Z_1\text{-(IEM)}_2\text{ )}$$

using dibutyltin dilaurate as catalyst. The diadduct in IPAC is combined with the additional comonomer adduct(s) and polymerized using UV irradiation (3 hours, 0.1 % BME initiator).

| Sample | Polymerization Mixture | | % IPAC | % $H_2O$ Content of Hydrogel |
|---|---|---|---|---|
| | % $Z_1$ Diadduct | % Comonomer Adduct | | |
| 1 | 61.0 | 1.0 $(Z_1\text{-(-IEM)}_2$ | 38.0 | 47.6 |
| 2 | 57.6 | 1.1 $(Z_1\text{-(-IEM)}_2$<br>5.5 $Z_1$/IEM | 35.8 | 44.3 |
| 3 (Control) | 61.6 | - | 38.4 | 48.7 |

| Sample | Physical Properties of Hydrogel | | |
|---|---|---|---|
| | Young's Modulus ($kg/cm^2$) | Stress ($kg/cm^2$) | % Elongation |
| 1 | 21 ± 4 | 3.0 ± 0.9 | 14 ± 3 |
| 2 | 22 ± 5 | 2.9 ± 0.4 | 13 ± 3 |
| 3 | 25 ± 5 | 4.0 ± 0.7 | 15 ± 2 |

## Claims

### Claims for the following Contracting States : AT, BE, CH, DE, DK, FR, GB, GR, IT, LI, LU, NL, SE

**1.** A macromer containing perfluoropolyalkylether and polyalkylether segments and ethylenically unsaturated moieties, having the formula I, more specifically as seen in formulas Ia to Id,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

wherein
Z is $-(C_aF_{2a}O)_b-CF_2-$, where a is 1 to 4 or a mixture thereof and b is 2 to 200;
X is a direct bond, $-CH_2-$, $-CH_2OCH_2CHOHCH_2-$, $-CH_2(OCH_2CH_2)_y-$ or carbonyl where y is 1 to 10;
Q is a direct bond, -CONH-R-NHCO- or -ACONH-R-NHCO- where A is oxa or imino and R is a divalent aliphatic group having from 2 to 14 carbon atoms, a divalent 5-or 6-membered cycloaliphatic group having 5 to 14 carbon atoms or an arylene group having 6 to 14 carbon atoms, and wherein the A of Q is attached to X;
L is $-A(C_mH_{2m}O)_nC_mH_{2m}AY$ or La, where Y is a direct bond when L is divalent or hydrogen when L is monovalent, and m is 2 to 4 or a mixture thereof and n is 5 to 100; wherein A is as hereinbefore defined;
T is $-CONH-R_5A-$ or $-CONH-R-NHCOOR_5A-$ or -CONH-R-NHCO-A- or $-R_5A-$ or a direct bond where A thereof is attached to E, where $R_5$ is alkylene or hydroxy-substituted alkylene of 2 to 15 carbon atoms and A and R are as hereinbefore defined;
E is $-CO-C(R_1)=CHR_2$ or $-CONH-phenyl-C(R_1)=CR_2H$ or $-CONH-C(R_4)_2-phenyl-C(R_1)=CHR_2$
where $R_1$ is hydrogen or methyl, and $R_2$ is hydrogen, methyl or $-COOR_3$,
where $R_3$ is hydrogen or alkyl of 1 to 4 carbon atoms with the proviso that, when $R_1$ is methyl, $R_2$ is hydrogen; and wherein $R_4$ is hydrogen or methyl;
G is $-(C_aF_{2a}O)_b-CF_2[CH_2-OCONH-R-NHCOOCH_2CF_2(OC_aF_{2a})_b]_x-$ or $-(C_aF_{2a}O)_b-CF_2[CH_2-NHCONH-R-NHCONHCH_2CF_2(OC_aF_{2a})_b]_x-$ where x is 1 to 3; and a, b and R are as above; and
La is $-A(C_mH_{2m}O)_n[C_mH_{2m}ACONH-R-NHCOA(C_mH_{2m}O)_{na}]_zC_mH_{2m}AY$
where na is 5 to 100, z is 1 to 10 and Y is a direct bond when La is divalent or hydrogen when La is monovalent, and A, R, m and n are as hereinbefore defined.

**2.** A macromer according to claim 1, wherein X is $-CH_2-$ or $-CH_2(OCH_2CH_2)_y-$where y is 1 or 2.

**3.** A macromer according to claim 1 wherein Q is -ACONH-R-NHCO- where R is the radical derived from hexane- 1,6-diisocyanate, trimethyl-hexane-1,6-diisocyanate, tetramethylene-diisocyanate, phenylene-1,4-diisocyanate, toluene-2,4-diisocyanate, toluene-2,6-diisocyanate, m- or p-tetramethylxylenediisocyanate, isophorone diisocyanate or cyclohexane-1,4-diisocyanate.

**4.** A macromer according to claim 3 wherein R is the divalent radical derived from isophorone diisocyanate.

**5.** A macromer according to claim 1 where in Z, a is 1 or 2, and b is 3 to 50.

**6.** A macromer according to claim 1 where L is $-O(C_mH_{2m}O)_nC_mH_{2m}O-$ where m is 2 or a mixture of 2 and 3, and n is 10-50.

**7.** A macromer according to claim 1 where T is $-CONH-R_5A-$ and $R_5$ is ethylene and A is oxa.

**8.** A macromer according to claim 1 where T is $-CONH-R-NHCOOR_5A-$ and $R_5$ is ethylene and R is the radical derived from isophorone diisocyanate and A is oxa.

**9.** A macromer according to claim 1 where E is $-CO-C(R_1)=CHR_2$ where $R_1$ is methyl and $R_2$ is hydrogen.

**10.** A macromer according to claim 1 where E is $-CONH\text{-phenyl-}C(R_1)=CHR_2$ where $R_1$ and $R_2$ are both hydrogen.

**11.** A macromer according to claim 1 where in G, x is 1 and R is a radical derived from isophorone diisocyanate.

**12.** A macromer according to claim 1 where in La, A is oxa, R is a radical derived from isophorone diisocyanate, z is 1 to 5 and na is 5 to 100.

**13.** A macromer according to claim 1 having the formula (Ia) E-T-L-Q-X-Z-X-Q-L-T-E.

**14.** A macromer according to claim 13 wherein
E is $-CO-C(CH_3)=CH_2$,
T is $-CONH-CH_2CH_2-O-$,
L is $-O(C_2H_4O)_nC_2H_4O-$ where n is 19-25,
Q is -OCONH-isophorone-NHCO-,
X is $-CH_2-$, and
Z is $-CF_2O(C_2F_4O)_r-(CF_2O)_s-CF_2-$ where
r:s is in the range of 1:10 to 5:1 and is preferably about 0.7.

**15.** A macromer according to claim 1 prepared by endcapping
(a) $HOCH_2-(C_aF_{2a}O)_b-CF_2-CH_2OH$ where a is 1 to 4 and b is 2 to 200 with
(b)

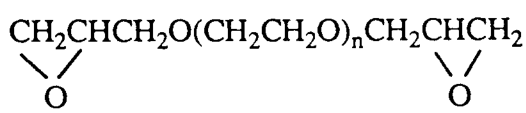

where n is 5 to 100 followed by reaction with
(c) 2-isocyanatoethyl methacrylate wherein the reactants a:b:c are in a 1:2:2 molar ratio.

**16.** A crosslinked homopolymerization product of a macromer
E-T-L-Q-X-Z-X-Q-L-T-E or
E-T-L-Q-X-G-X-Q-L-T-E
according to claim 1.

**17.** A crosslinked product according to claim 16 wherein the macromer is
E-T-L-Q-X-Z-X-Q-L-T-E where
E is $-CO-C(CH_3)=CH_2$,
T is $-CONH-CH_2CH_2-O-$,
L is $-O(C_2H_4O)_nC_2H_4O-$ where n is 19-25,
Q is -OCONH-isophorone-NHCO-,
X is $-CH_2-$, and
Z is $-CF_2O(C_2F_4O)_r-(CF_2O)_s-CF_2$ where
r:s is in the range of 1:10 to 5:1 and is preferably about 0.7.

**18.** A crosslinked copolymerization product of the macromer
E-T-L-Q-X-Z-X-Q-L-T-E or
E-T-L-Q-X-Z-X-Q-L
according to claim 1.

**19.** A product according to claim 18 where more than 1 % of the material, preferably more than 10% of the material is derived from the macromer E-T-L-Q-X-Z-X-Q-L-T-E.

**20.** A product according to claim 18 where more than 20 % of the material, preferably more than 30 % of the material is derived from the macromer E-T-L-Q-X-Z-X-Q-L-T-E.

**21.** A crosslinked homopolymerization product of the macromer of claim 15.

**22.** A method of preparing a hydrogel contact lens by crosslinking a macromer according to claim 1 in an inert solvent in a mold by free radical polymerization and equilibrating the resulting solvent swollen crosslinked contact lens in an aqueous medium.

**23.** A method according to claim 22 wherein the solvent is a lower alkanol, N,N-dimethylformamide, acetamide, acetonitrile, N,N-dimethylacetamide, dimethyl sulfoxide, acetone, tert-butyl acetate, isopropyl acetate or mixtures thereof.

**24.** A method according to claim 23 wherein the solvent is isopropyl acetate.

**25.** An ophthalmic device made according to claim 22.

**26.** An ophthalmic device prepared from the product of claim 16.

**27.** An ophthalmic device prepared from the product of claim 17.

**28.** An ophthalmic device prepared from the product of claim 18.

**29.** An ophthalmic device prepared from the product of claim 21.

**30.** A hydrogel contact lens made according to claim 22.

**31.** A hydrogel contact lens made according to claim 22 with greater than 20 % water content, preferably with greater than 30 % water content.

**32.** A hydrogel contact lens made according to claim 22 with greater than 40 % water content, preferably with greater than 50 % water content.

**33.** A hydrogel contact lens made according to claim 22 with between 25 and 55 % water content.

**34.** A contact lens according to claim 26.

**35.** A contact lens according to claim 27.

**36.** A contact lens according to claim 28.

**37.** A contact lens according to claim 29.

**38.** A crosslinked polymer which is the addition polymerization product of
(a) a macromer containing perfluoropolyalkylether and polyalkylether segments and ethylenically unsaturated moieties, having the formula I, more specifically as seen in formulas Ia to Id,

E-T-L-Q-X-Z-X-Q-L-T-E,  (Ia)

E-T-L-Q-X-Z-X-Q-L,  (Ib)

E-T-L-Q-X-G-X-Q-L-T-E, (Ic)

E-T-L-Q-X-G-X-Q-L, (Id)

wherein
Z is $-(C_aF_{2a}O)_b-CF_2-$, where a is 1 to 4 or a mixture thereof and b is 2 to 200;
X is a direct bond, $-CH_2-$, $-CH_2OCH_2CHOHCH_2-$, $-CH_2(OCH_2CH_2)_y-$ or carbonyl where y is 1 to 10;
Q is a direct bond, -CONH-R-NHCO- or -ACONH-R-NHCO- where A is oxa or imino and R is a divalent aliphatic group having from 2 to 14 carbon atoms, a divalent 5-or 6-membered cycloaliphatic group having 5 to 14 carbon atoms or an arylene group having 6 to 14 carbon atoms, and wherein the A of Q is attached to X;
L is $-A(C_mH_{2m}O)_nC_mH_{2m}AY$ or La, where Y is a direct bond when L is divalent or hydrogen when L is monovalent, and m is 2 to 4 or a mixture thereof and n is 5 to 100; wherein A is as hereinbefore defined;
T is $-CONH-R_5A-$ or $-CONH-R-NHCOOR_5A-$ or -CONH-R-NHCO-A- or $-R_5A$-or a direct bond where A thereof is attached to E, where $R_5$ is alkylene or hydroxy-substituted alkylene of 2 to 15 carbon atoms and A and R are as hereinbefore defined;
E is $-CO-C(R_1)=CHR_2$ or $-CONH\text{-phenyl-}C(R_1)=CR_2H$ or $-CONH-C(R_4)_2\text{-phenyl-}C(R_1)=CHR_2$ where $R_1$ is hydrogen or methyl, and $R_2$ is hydrogen, methyl or $-COOR_3$,
where $R_3$ is hydrogen or alkyl of 1 to 4 carbon atoms with the proviso that, when $R_1$ is methyl, $R_2$ is hydrogen; and wherein $R_4$ is hydrogen or methyl;
G is $-(C_aF_{2a}O)_b-CF_2[CH_2-OCONH-R-NHCOOCH_2CF_2(OC_aF_{2a})_b]_x-$ or $-(C_aF_{2a}O)_b-CF_2[CH_2-NHCONH-R-NHCONHCH_2CF_2(OC_aF_{2a})_b]_x-$ where x is 1 to 3; and a, b and R are as above; and
La is $-A(C_mH_{2m}O)_n[C_mH_{2m}ACONH-R-NHCOA(C_mH_{2m}O)_{na}]_zC_mH_{2m}AY$
where na is 5 to 100, z is 1 to 10 and Y is a direct bond when La is divalent or hydrogen when La is monovalent, and A, R, m and n are as hereinbefore defined and
b) a vinylic comonomer which is
(i) a hydrophilic vinylic monomer,
(ii) a hydrophobic vinylic monomer,
(iii) a polyreactive crosslinking agent,
or (iv) a mixture of one or more (i), (ii) and (iii).

**39.** A polymer according to claim 38 wherein the hydrophilic vinylic monomer is selected from hydroxy-substituted lower alkyl acrylates and methacrylates, acrylamide, methacrylamide, $C_1$-$C_2$ lower alkyl acrylamide and methacrylamide, ethoxylated acrylates and methacrylates, hydroxy substituted lower alkyl acrylamide and methacrylamide, hydroxy substitued lower alkyl vinyl ethers, sodium ethylene sulfonate, sodium styrenesulfonate, 2-acrylamido-2methylpropanesulfonic acid, N-vinylpyrrole, N-vinylsuccinimide, N-vinylpyrrolidone, 2- and 4-vinylpyridine, acrylic acid, methacrylic acid, amino (by amino including quaternary ammonium), -monoloweralkylamino-or diloweralkylamino- lower alkyl acrylates or methacrylates and allyl alcohol;
the hydrophobic vinylic monomer is selected from $C_1$ to $C_{18}$ alkyl acrylates and methacrylates, $C_3$ to $C_{18}$ alkyl acrylamides and methacrylamides, acrylonitrile, methacrylonitrile, vinyl $C_1$ to $C_{18}$ alkanoates, $C_2$ to $C_{18}$ alkenes, $C_2$ to $C_{18}$ haloalkenes, styrene, $C_1$ to $C_6$ alkyl styrenes, vinyl alkyl ethers wherein the alkyl portion has 1 to 6 carbon atoms, $C_3$-$C_{12}$ perfluoroalkyl ethyl thiocarbonylaminoethyl acrylates and methacrylates, $C_3$-$C_{12}$ fluoroalkyl acrylates and methacrylates, acryloxy and methacryloxy-alkylsiloxanes, N-vinylcarbazole, $C_1$-$C_{12}$ alkyl esters of maleic, fumaric, itaconic, and mesaconic acids;
and the polyreactive crosslinking agent is selected from allyl methacrylate, diallyl itaconate, monoallyl itaconate, diallyl maleate, diallyl fumarate, diallyl succinate, diallyl phthalate, triallyl cyanurate, triallyl isocyanurate, diethylene glycol bis-allyl carbonate, triallyl phosphate, triallyl trimellitate, allyl ether, N,N-diallylmelamine; divinyl benzene, N,N'-methylene-bis-acrylamide, ethylene glycol dimethacrylate, neopentylglycol dimethacrylate, tetraethylene glycol dimethacrylate, hexamethylene-bis-maleimide,divinyl urea, bisphenol A bis methacrylate, divinyl adipate, glycerin trimethacrylate, trimethylolpropane triacrylate, trivinyl trimellitate, 1,5-pentadiene, 1,3-bis(4-methacryloxybutyl) tetramethyl disiloxane, divinyl ether, divinyl sulfone; and the dimethacrylate formed by reacting perfluoropolyalkylether dimethanol or poly(ethylene glycol) with two moles of isocyanatoethyl methacrylate.

**40.** A polymer according to claim 38 where in macromer (a), X is $-CH_2-$ or $-CH_2(OCH_2CH_2)_y-$ where y is 1 or 2.

**41.** A polymer according to claim 38 where in macromer (a), Q is -ACONH-R-NHCO- where R is the radical derived from hexane-1,6-diisocyanate, trimethyl-hexane-1,6-diisocyanate, tetramethylene-diisocyanate, phenylene-1,4-diisocyanate, toluene-2,4-diisocyanate, toluene-2,6-diisocyanate, m- or p-tetramethylxylenediisocyanate, isophorone diisocyanate or cyclohexane-1,4-diisocyanate.

**42.** A polymer according to claim 41 wherein R is the divalent radical derived from isophorone diisocyanate.

**43.** A polymer according to claim 38 where in macromer (a), a is 1 or 2, and b is 3 to 50.

**44.** A polymer according to claim 38 where in macromer (a), L is $-O(C_mH_{2m}O)_nC_mH_{2m}O-$where m is 2 or a mixture of 2 and 3, and n is 10-50.

**45.** A polymer according to claim 38 where in macromer (a), T is $-CONH-R_5A-$ and $R_5$ is ethylene and A is oxa.

**46.** A polymer according to claim 38 where in macromer (a), T is $-CONH-R-NHCOOR_5A-$ and $R_5$ is ethylene and R is the radical derived from isophorone diisocyanate and A is oxa.

**47.** A polymer according to claim 38 where in macromer (a), E is $-CO-C(R_1)=CHR_2$ where $R_1$ is methyl and $R_2$ is hydrogen.

**48.** A polymer according to claim 38 where in macromer (a), E is $-CONH-phenyl-C(R_1)=CHR_2$ where $R_1$ and $R_2$ are both hydrogen.

**49.** A polymer according to claim 38 where in macromer (a), x is 1 and R is a radical derived from isophorone diisocyanate.

**50.** A polymer according to claim 38 where in La of macromer (a), A is oxa, R is a radical derived from isophorone diisocyanate, z is 1 to 5 and na is 5 to 100.

**51.** A polymer according to claim 38 where the macromer (a) has the formula (Ia) E-T-L-Q-X-Z-X-Q-L-T-E.

**52.** A polymer according to claim 51 where in the macromer (a),
E is $-CO-C(CH_3)=CH_2$,
T is $-CONH-CH_2CH_2-O-$,
L is $-O(C_2H_4O)_nC_2H_4O-$ where n is 19-25,
Q is -OCONH-isophorone-NHCO-,
X is $-CH_2-$, and
Z is $-CF_2O(C_2F_4O)_r-(CF_2O)_s-CF_2-$ where
r:s is in the range of 1:10 to 5:1 and is preferably about 0.7.

**53.** A crosslinked polymer according to claim 38 wherein (b) is up to 10 % by weight.

**54.** A crosslinked polymer according to claim 53 wherein (b) is 2-hydroxyethyl methacrylate, N-vinylpyrrolidone, N,N-dimethylacrylamide, ethylene glycol dimethacrylate, the reaction product of poly(ethylene glycol) with two moles of 2-isocyanatoethyl methacrylate or the reaction product of perfluoropolyalkylether dimethanol with two moles of 2-isocyanatoethyl methacrylate.

**55.** A method of preparing a hydrogel contact lens by crosslinking a macromer (a) with a vinylic comonomer (b) according to claim 38 in an inert solvent in a mold by free radical polymerization and equilibrating the resulting solvent swollen crosslinked contact lens in an aqueous medium.

**56.** A method according to claim 55 wherein the solvent is a lower alkanol, N,N-dimethylformamide, acetamide, acetonitrile, N,N-dimethylacetamide, dimethyl sulfoxide, acetone, tert-butyl acetate,

isopropyl acetate or mixtures thereof.

**57.** A method according to claim 56 wherein the solvent is isopropyl acetate.

**58.** An ophthalmic device made according to claim 55.

**59.** An ophthalmic device prepared from the product of claim 38.

**60.** An ophthalmic device prepared from the product of claim 51.

**61.** An ophthalmic device prepared from the product of claim 52.

**62.** An ophthalmic device prepared from the product of claim 53.

**63.** An ophthalmic device prepared from the product of claim 54.

**64.** A contact lens according to claim 59.

**65.** A contact lens according to claim 60.

**66.** A contact lens according to claim 61.

**67.** A contact lens according to claim 62.

**68.** A contact lens according to claim 63.

**69.** A hydrogel contact lens made according to claim 55.

**70.** A hydrogel contact lens made according to claim 55 with greater than 20 % water content, preferably with greater than 30 % water content.

**71.** A hydrogel contact lens made according to claim 55 with greater than 40 % water content, preferably with greater than 50 % water content.

**72.** A hydrogel contact lens made according to claim 55 with between 25 and 55 % water content.

**73.** The use of a macromer according to claim 1 for making a contact lens.

**74.** The use of a polymer according to claim 38 for making a contact lens.

**Claims for the following Contracting State : ES**

**1.** A process for the manufacture of a macromer containing perfluoropolyalkylether and polyalkylether segments and ethylenically unsaturated moieties, having the formula I, more specifically as seen in formulas Ia to Id,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

wherein
Z is $(C_aF_{2a}O)_b$-$CF_2$-, where a is 1 to 4 or a mixture thereof and b is 2 to 200;
X is a direct bond, -$CH_2$-, -$CH_2OCH_2CHOHCH_2$-, -$CH_2(OCH_2CH_2)_y$- or carbonyl where y is 1 to 10;
Q is a direct bond, -CONH-R-NHCO- or -ACONH-R-NHCO- where A is oxa or imino and R is a divalent

aliphatic group having from 2 to 14 carbon atoms, a divalent 5-or 6-membered cycloaliphatic group having 5 to 14 carbon atoms or an arylene group having 6 to 14 carbon atoms, and wherein the A of Q is attached to X;

L is $-A(C_mH_{2m}O)_nC_mH_{2m}AY$ or La, where Y is a direct bond when L is divalent or hydrogen when L is monovalent, and m is 2 to 4 or a mixture thereof and n is 5 to 100; wherein A is as hereinbefore defined;

T is $-CONH-R_5A-$ or $-CONH-R-NHCOOR_5A-$ or -CONH-R-NHCO-A- or $-R_5A-$ or a direct bond where A thereof is attached to E, where $R_5$ is alkylene or hydroxy-substituted alkylene of 2 to 15 carbon atoms and A and R are as hereinbefore defined;

E is $-CO-C(R_1)=CHR_2$ or $-CONH-phenyl-C(R_1)=CR_2H$ or $-CONH-C(R_4)_2-phenyl-C(R_1)=CHR_2$ where $R_1$ is hydrogen or methyl, and $R_2$ is hydrogen, methyl or $-COOR_3$,

where $R_3$ is hydrogen or alkyl of 1 to 4 carbon atoms with the proviso that, when $R_1$ is methyl, $R_2$ is hydrogen; and wherein $R_4$ is hydrogen or methyl;

G is $-(C_aF_{2a}O)_b-CF_2[CH_2-OCONH-R-NHCOOCH_2CF_2(OC_aF_{2a})_b]_x-$ or $-(C_aF_{2a}O)_b-CF_2[CH_2-NHCONH-R-NHCONHCH_2CF_2(OC_aF_{2a})_b]_x-$ where x is 1 to 3; and a, b and R are as above; and

La is $-A(C_mH_{2m}O)_n[C_mH_{2m}ACONH-R-NHCOA(C_mH_{2m}O)_{na}]_zC_mH_{2m}AY$ where na is 5 to 100, z is 1 to 10 and Y is a direct bond when La is divalent or hydrogen when La is monovalent, and A, R, m and n are as hereinbefore defined;

characterized in that corresponding starting materials are reacted in a manner known per se.

**2.** A process according to claim 1, wherein X is $-CH_2-$ or $CH_2(OCH_2CH_2)_y$-where y is 1 or 2.

**3.** A process according to claim 1 wherein Q is -ACONH-R-NHCO- where R is the radical derived from hexane-1,6-diisocyanate, trimethyl-hexane-1,6-diisocyanate, tetramethylene-diisocyanate, phenylene-1,4-diisocyanate, toluene-2,4-diisocyanate, toluene-2,6-diisocyanate, m- or p-tetramethylxylenediisocyanate, isophorone diisocyanate or cyclohexane-1,4-diisocyanate.

**4.** A process according to claim 3 wherein R is the divalent radical derived from isophorone diisocyanate.

**5.** A process according to claim 1 where in Z, a is 1 or 2, and b is 3 to 50.

**6.** A process according to claim 1 where L is $-O(C_mH_{2m}O)_nC_mH_{2m}O-$ where m is 2 or a mixture of 2 and 3, and n is 10-50.

**7.** A process according to claim 1 where T is $-CONH-R_5A-$ and $R_5$ is ethylene and A is oxa.

**8.** A process according to claim 1 where T is $-CONH-R-NHCOOR_5A-$ and $R_5$ is ethylene and R is the radical derived from isophorone diisocyanate and A is oxa.

**9.** A process according to claim 1 where E is -CO-C(R,) = $CHR_2$ where $R_1$ is methyl and $R_2$ is hydrogen.

**10.** A process according to claim 1 where E is $-CONH-phenyl-C(R_1)=CHR_2$ where $R_1$ and $R_2$ are both hydrogen.

**11.** A process according to claim 1 where in G, x is 1 and R is a radical derived from isophorone diisocyanate.

**12.** A process according to claim 1 where in La, A is oxa, R is a radical derived from isophorone diisocyanate, z is 1 to 5 and na is 5 to 100.

**13.** A process according to claim 1 wherein a compound having the formula (Ia) E-T-L-Q-X-Z-X-Q-L-T-E is prepared.

**14.** A process according to claim 13 wherein
E is $-CO-C(CH_3)=CH_2$,
T is $-CONH-CH_2CH_2-O-$,
L is $-O(C_2H_4O)_nC_2H_4O-$ where n is 19-25,
Q is -OCONH-isophorone-NHCO-,

X is $-CH_2-$, and
Z is $-CF_2O(C_2F_4O)_r-(CF_2O)_s-CF_2-$ where
r:s is in the range of 1:10 to 5:1 and is preferably about 0.7.

**15.** A process according to claim 1 characterized by endcapping
(a) $HOCH_2-(C_aF_{2a}O)_b-CF_2-CH_2OH$ where a is 1 to 4 and b is 2 to 200 with
(b)

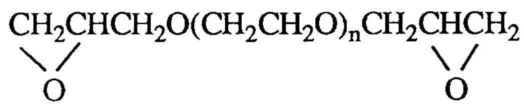

where n is 5 to 100 followed by reaction with
(c) 2-isocyanatoethyl methacrylate wherein the reactants a:b:c are in a 1:2:2 molar ratio.

**16.** A process for the manufacture of a crosslinked homopolymerization product characterized in that a macromer
E-T-L-Q-X-Z-X-Q-L-T-E or
E-T-L-Q-X-G-X-Q-L-T-E
according to claim 1, is homopolymerized in a manner known per se.

**17.** A process according to claim 16 wherein the macromer is
E-T-L-Q-X-Z-X-Q-L-T-E where
E is $-CO-C(CH_3)=CH_2$,
T is $-CONH-CH_2CH_2-O-$,
L is $-O(C_2H_4O)_nC_2H_4O-$ where n is 19-25,
Q is -OCONH-isophorone-NHCO-,
X is $-CH_2-$, and
Z is $-CF_2O(C_2F_4O)_r-(CF_2O)_s-CF_2$ where
r:s is in the range of 1:10 to 5:1 and is preferably about 0.7.

**18.** A process for the manufacture of a crosslinked copolymerization product characterized in that a macromer
E-T-L-Q-X-Z-X-Q-L-T-E or
E-T-L-Q-X-Z-X-Q-L
according to claim 1, is copolymerized in a manner known per se.

**19.** A process according to claim 18 where more than 1 % of the material, preferably more than 10 % of the material is derived from the macromer E-T-L-Q-X-Z-X-Q-L-T-E.

**20.** A process according to claim 18 where more than 20 % of the material, preferably more than 30 % of the material is derived from the macromer E-T-L-Q-X-Z-X-Q-L-T-E.

**21.** A process for obtaining a crosslinked homopolymerization product by homopolymerizing the macromer of claim 15 in a manner known per se.

**22.** A method of preparing a hydrogel contact lens by crosslinking a macromer according to claim 1 in an inert solvent in a mold by free radical polymerization and equilibrating the resulting solvent swollen crosslinked contact lens in an aqueous medium.

**23.** A method according to claim 22 wherein the solvent is a lower alkanol, N,N-dimethylformamide, acetamide, acetonitrile, N,N-dimethylacetamide, dimethyl sulfoxide, acetone, tert-butyl acetate, isopropyl acetate or mixtures thereof.

**24.** A method according to claim 23 wherein the solvent is isopropyl acetate.

**25.** An ophthalmic device made according to claim 22.

**26.** An ophthalmic device prepared from the product of claim 16.

**27.** An ophthalmic device prepared from the product of claim 17.

**28.** An ophthalmic device prepared from the product of claim 18.

**29.** An ophthalmic device prepared from the product of claim 21.

**30.** A hydrogel contact lens made according to claim 22.

**31.** A hydrogel contact lens made according to claim 22 with greater than 20 % water content, preferably with greater than 30 % water content.

**32.** A hydrogel contact lens made according to claim 22 with greater than 40 % water content, preferably with greater than 50 % water content.

**33.** A hydrogel contact lens made according to claim 22 with between 25 and 55 % water content.

**34.** A contact lens according to claim 26.

**35.** A contact lens according to claim 27.

**36.** A contact lens according to claim 28.

**37.** A contact lens according to claim 29.

**38.** A process for the manufacture of a crosslinked polymer which is the addition polymerization product of (a) a macromer containing perfluoropolyalkylether and polyalkylether segments and ethylenically unsaturated moieties, having the formula I, more specifically as seen in formulas Ia to Id,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

wherein
Z is $-(C_aF_{2a}O)_b-CF_2-$, where a is 1 to 4 or a mixture thereof and b is 2 to 200;
X is a direct bond, $-CH_2-$, $-CH_2OCH_2CHOHCH_2-$, $CH_2(OCH_2CH_2)_y-$ or carbonyl where y is 1 to 10;
Q is a direct bond, -CONH-R-NHCO- or -ACONH-R-NHCO- where A is oxa or imino and R is a divalent aliphatic group having from 2 to 14 carbon atoms, a divalent 5-or 6-membered cycloaliphatic group having 5 to 14 carbon atoms or an arylene group having 6 to 14 carbon atoms, and wherein the A of Q is attached to X;
L is $-A(C_mH_{2m}O)_nC_mH_{2m}AY$ or La, where Y is a direct bond when L is divalent or hydrogen when L is monovalent, and m is 2 to 4 or a mixture thereof and n is 5 to 100; wherein A is as hereinbefore defined;
T is $-CONH-R_5A-$ or $-CONH-R-NHCOOR_5A-$ or -CONH-R-NHCO-A- or $-R_5A-$or a direct bond where A thereof is attached to E, where $R_5$ is alkylene or hydroxy-substituted alkylene of 2 to 15 carbon atoms and A and R are as hereinbefore defined;
E is $-CO-C(R_1)=CHR_2$ or $-CONH\text{-phenyl-}C(R_1)=CR_2H$ or $-CONH-C(R_4)_2\text{-phenyl-}C(R_1)=CHR_2$ where $R_1$ is hydrogen or methyl, and $R_2$ is hydrogen, methyl or $-COOR_3$,
where $R_3$ is hydrogen or alkyl of 1 to 4 carbon atoms with the proviso that, when $R_1$ is methyl, $R_2$ is hydrogen; and wherein $R_4$ is hydrogen or methyl;
G is $-(C_aF_{2a}O)_b-CF_2[CH_2-OCONH-R-NHCOOCH_2CF_2(OC_aF_{2a})_b]_x-$ or $-(C_aF_{2a}O)_b-CF_2[CH_2-NHCONH-R-NHCONHCH_2CF_2(OC_aF_{2a})_b]_x-$ where x is 1 to 3; and a, b and R are as above; and
La is $-A(C_mH_{2m}O)_n[C_mH_{2m}ACONH-R-NHCOA(C_mH_{2m}O)_{na}]_zC_mH_{2m}AY$ where na is 5 to 100, z is 1 to 10

and Y is a direct bond when La is divalent or hydrogen when La is monovalent, and A, R, m and n are as hereinbefore defined and

b) a vinylic comonomer which is

(i) a hydrophilic vinylic monomer,

(ii) a hydrophobic vinylic monomer,

(iii) a polyreactive crosslinking agent,

or (iv) a mixture of one or more (i), (ii) and (iii);

characterized in conventionally copolymerizing the macromer and one or more vinylic comonomers as hereinbefore defined.

**39.** A process according to claim 38 wherein the hydrophilic vinylic monomer is selected from hydroxy-substituted lower alkyl acrylates and methacrylates, acrylamide, methacrylamide, $C_1$-$C_2$ lower alkyl acrylamide and methacrylamide, ethoxylated acrylates and methacrylates, hydroxy substituted lower alkyl acrylamide and methacrylamide, hydroxy substitued lower alkyl vinyl ethers, sodium ethylene sulfonate, sodium styrenesulfonate, 2-acrylamido-2-methylpropanesulfonic acid, N-vinylpyrrole, N-vinylsuccinimide, N-vinylpyrrolidone, 2- and 4-vinylpyridine, acrylic acid, methacrylic acid, amino (by amino including quaternary ammonium), -monoloweralkylamino-or diloweralkylamino- lower alkyl acrylates or methacrylates and allyl alcohol;

the hydrophobic vinylic monomer is selected from $C_1$ to $C_{18}$ alkyl acrylates and methacrylates, $C_3$ to $C_{18}$ alkyl acrylamides and methacrylamides, acrylonitrile, methacrylonitrile, vinyl $C_1$ to $C_{18}$ alkanoates, $C_2$ to $C_{18}$ alkenes, $C_2$ to $C_{18}$ haloalkenes, styrene, $C_1$ to $C_6$ alkyl styrenes, vinyl alkyl ethers wherein the alkyl portion has 1 to 6 carbon atoms, $C_3$-$C_{12}$ perfluoroalkyl ethyl thiocarbonylaminoethyl acrylates and methacrylates, $C_3$-$C_{12}$ fluoroalkyl acrylates and methacrylates, acryloxy and methacryloxy-alkylsiloxanes, N-vinylcarbazole, $C_1$-$C_{12}$ alkyl esters of maleic, fumaric, itaconic, and mesaconic acids;

and the polyreactive crosslinking agent is selected from allyl methacrylate, diallyl itaconate, monoallyl itaconate, diallyl maleate, diallyl fumarate, diallyl succinate, diallyl phthalate, triallyl cyanurate, triallyl isocyanurate, diethylene glycol bis-allyl carbonate, triallyl phosphate, triallyl trimellitate, allyl ether, N,N-diallylmelamine; divinyl benzene, N,N'-methylene-bis-acrylamide, ethylene glycol dimethacrylate, neopentylglycol dimethacrylate, tetraethylene glycol dimethacrylate, hexamethylene-bis-maleimide,divinyl urea, bisphenol A bis methacrylate, divinyl adipate, glycerin trimethacrylate, trimethylolpropane triacrylate, trivinyl trimellitate, 1,5-pentadiene, 1,3-bis(4-methacryloxybutyl) tetramethyl disiloxane, divinyl ether, divinyl sulfone; and the dimethacrylate formed by reacting perfluoropolyalkylether dimethanol or poly(ethylene glycol) with two moles of isocyanatoethyl methacrylate.

**40.** A process according to claim 38 where in macromer (a), X is $-CH_2-$ or $-CH_2(OCH_2CH_2)_y-$ where y is 1 or 2.

**41.** A process according to claim 38 where in macromer (a), Q is -ACONH-R-NHCO- where R is the radical derived from hexane-1,6-diisocyanate, trimethyl-hexane-1,6-diisocyanate, tetramethylene-diisocyanate, phenylene-1,4-diisocyanate, toluene-2,4-diisocyanate, toluene-2,6-diisocyanate, m- or p-tetramethylxylenediisocyanate, isophorone diisocyanate or cyclohexane-1,4-diisocyanate.

**42.** A process according to claim 41 wherein R is the divalent radical derived from isophorone diisocyanate.

**43.** A process according to claim 38 where in macromer (a), a is 1 or 2, and b is 3 to 50.

**44.** A process according to claim 38 where in macromer (a), L is $-O(C_mH_{2m}O)_nC_mH_{2m}O-$where m is 2 or a mixture of 2 and 3, and n is 10-50.

**45.** A process according to claim 38 where in macromer (a), T is $-CONH-R_5A-$ and $R_5$ is ethylene and A is oxa.

**46.** A process according to claim 38 where in macromer (a), T is $-CONH-R-NHCOOR_5A-$ and $R_5$ is ethylene and R is the radical derived from isophorone diisocyanate and A is oxa.

**47.** A process according to claim 38 where in macromer (a), E is $-CO-C(R_1)=CHR_2$ where $R_1$ is methyl and $R_2$ is hydrogen.

**48.** A process according to claim 38 where in macromer (a), E is -CONH-phenyl-C($R_1$) = $CHR_2$ where $R_1$ and $R_2$ are both hydrogen.

**49.** A process according to claim 38 where in macromer (a), x is 1 and R is a radical derived from isophorone diisocyanate.

**50.** A process according to claim 38 where in La of macromer (a), A is oxa, R is a radical derived from isophorone diisocyanate, z is 1 to 5 and na is 5 to 100.

**51.** A process according to claim 38 where the macromer (a) has the formula (Ia) E-T-L-Q-X-Z-X-Q-L-T-E.

**52.** A process according to claim 51 where in the macromer (a),
E is $-CO-C(CH_3)=CH_2$,
T is $-CONH-CH_2CH_2-O-$,
L is $-O(C_2H_4O)_nC_2H_4O-$ where n is 19-25,
Q is -OCONH-isophorone-NHCO-,
X is $-CH_2-$, and
Z is $-CF_2O(C_2F_4O)_r-(CF_2O)_s-CF_2-$ where
r:s is in the range of 1:10 to 5:1 and is preferably about 0.7.

**53.** A process according to claim 38 wherein (b) is up to 10 % by weight.

**54.** A process according to claim 53 wherein (b) is 2-hydroxyethyl methacrylate, N-vinylpyrrolidone, N,N-dimethylacrylamide, ethylene glycol dimethacrylate, the reaction product of poly(ethylene glycol) with two moles of 2-isocyanatoethyl methacrylate or the reaction product of perfluoropolyalkylether dimethanol with two moles of 2-isocyanatoethyl methacrylate.

**55.** A method of preparing a hydrogel contact lens by crosslinking a macromer (a) with a vinylic comonomer (b) according to claim 38 in an inert solvent in a mold by free radical polymerization and equilibrating the resulting solvent swollen crosslinked contact lens in an aqueous medium.

**56.** A method according to claim 55 wherein the solvent is a lower alkanol, N,N-dimethylformamide, acetamide, acetonitrile, N,N-dimethylacetamide, dimethyl sulfoxide, acetone, tert-butyl acetate, isopropyl acetate or mixtures thereof.

**57.** A method according to claim 56 wherein the solvent is isopropyl acetate.

**58.** An ophthalmic device made according to claim 55.

**59.** An ophthalmic device prepared from the product of claim 38.

**60.** An ophthalmic device prepared from the product of claim 51.

**61.** An ophthalmic device prepared from the product of claim 52.

**62.** An ophthalmic device prepared from the product of claim 53.

**63.** An ophthalmic device prepared from the product of claim 54.

**64.** A contact lens according to claim 59.

**65.** A contact lens according to claim 60.

**66.** A contact lens according to claim 61.

**67.** A contact lens according to claim 62.

**68.** A contact lens according to claim 63.

69. A hydrogel contact lens made according to claim 55.

70. A hydrogel contact lens made according to claim 55 with greater than 20 % water content, preferably with greater than 30 % water content.

71. A hydrogel contact lens made according to claim 55 with greater than 40 % water content, preferably with greater than 50 % water content.

72. A hydrogel contact lens made according to claim 55 with between 25 and 55 % water content.

73. The use of a macromer according to claim 1 for making a contact lens.

74. The use of a polymer according to claim 38 for making a contact lens.

## Patentansprüche

## Patentansprüche für folgende Vertragsstaaten : AT, BE, CH, DE, DK, FR, GB, GR, IT, LI, LU, NL, SE

1. Makromer, enthaltend Perfluorpolyalkylether- und Polyalkylethersegmente und ethylenisch ungesättigte Reste, die die Formel I aufweisen, insbesondere wie in Formeln Ia bis Id ersichtlich,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

worin Z $-(C_aF_{2a}O)_b-CF_2-$ bedeutet, wobei a 1 bis 4 oder ein Gemisch davon bedeutet und b 2 bis 200 darstellt;

X eine direkte Bindung, $-CH_2-$, $-CH_2OCH_2CHOHCH_2-$, $-CH_2(OCH_2CH_2)_y-$ oder Carbonyl darstellt, wobei y 1 bis 10 ist;

Q eine direkte Bindung, -CONH-R-NHCO- oder -ACONH-R-NHCO- bedeutet, wobei A Oxa oder Imino bedeutet und R eine zweiwertige aliphatische Gruppe mit 2 bis 14 Kohlenstoffatomen, eine zweiwertige 5- oder 6-gliedrige cycloaliphatische Gruppe mit 5 bis 14 Kohlenstoffatomen oder eine Arylengruppe mit 6 bis 14 Kohlenstoffatomen darstellt und worin A von Q an X gebunden ist;

L $-A(C_mH_{2m}O)_nC_mH_{2m}AY$ oder La bedeutet, worin Y eine direkte Bindung darstellt, wenn L zweiwertig ist oder Wasserstoff bedeutet; wenn L einwertig ist und m 2 bis 4 oder ein Gemisch davon darstellt und n 5 bis 100 bedeutet; wobei A wie vorstehend definiert ist;

T $-CONH-R_5A-$ oder $-CONH-R-NHCOOR_5A-$ oder -CONH-R-NHCO-A- oder $-R_5A-$oder eine direkte Bindung darstellt, wenn der Rest A davon an E gebunden ist, worin $R_5$ Alkylen oder Hydroxy-substituiertes Alkylen mit 2 bis 15 Kohlenstoffatomen darstellt und A und R wie vorstehend definiert sind;

E $-CO-C(R_1)=CHR_2$ oder $-CONH-Phenyl-C(R_1)=CR_2H$ oder $-CONH-C(R_4)_2-Phenyl-C(R_1)=CHR_2$ bedeutet,

worin $R_1$ Wasserstoff oder Methyl bedeutet, und $R_2$ Wasserstoff, Methyl oder $-COOR_3$ darstellt,

worin $R_3$ Wasserstoff oder Alkyl mit 1 bis 4 Kohlenstoffatomen darstellt, mit der Maßgabe, daß wenn $R_1$ Methyl bedeutet, $R_2$ Wasserstoff darstellt; und worin $R_4$ Wasserstoff oder Methyl bedeutet;

G $-(C_aF_{2a}O)_b-CF_2[CH_2-OCONH-R-NHCOOCH_2CF_2(OC_aF_{2a})_b]_x-$ oder $-(C_aF_{2a}O)_b-CF_2[CH_2-NHCONH-R-NHCONHCH_2CF_2(OC_aF_{2a})_b]_x-$ darstellt, worin x 1 bis 3 bedeutet; und a, b und R wie vorstehend definiert sind; und

La $-A(C_mH_{2m}O)_n[C_mH_{2m}ACONH-R-NHCOA(C_mH_{2m}O)_{na}]_zC_mH_{2m}AY$ darstellt, worin na 5 bis 100 bedeutet, z 1 bis 10 darstellt und Y eine direkte Bindung darstellt, wenn La zweiwertig ist oder Wasserstoff ist, wenn La einwertig ist und A, R, m und n wie vorstehend definiert sind.

2. Makromer nach Anspruch 1, wobei X $-CH_2-$ oder $-CH_2(OCH_2CH_2)_y-$ bedeutet, worin y 1 oder 2 darstellt.

**3.** Makromer nach Anspruch 1, wobei Q -ACONH-R-NHCO- bedeutet, worin R das Radikal, abgeleitet von Hexan-1,6-diisocyanat, Trimethylhexan-1,6-diisocyanat, Tetramethylendiisocyanat, Phenylen-1,4-diisocyanat, Toluol-2,4-diisocyanat, Toluol-2,6-diisocyanat, m- oder p-Tetramethylxyloldiisocyanat, Isophorondiisocyanat oder Cyclohexan-1,4-diisocyanat darstellt.

**4.** Makromer nach Anspruch 3, worin R ein zweiwertiges Radikal, abgeleitet von Isophorondiisocyanat, ist.

**5.** Makromer nach Anspruch 1, wobei in Z a 1 oder 2 ist und b 3 bis 50 ist.

**6.** Makromer nach Anspruch 1, worin L $-O(C_mH_{2m}O)_nC_mH_{2m}O-$ bedeutet, wobei m 2 oder ein Gemisch von 2 und 3 darstellt und n 10 bis 50 ist.

**7.** Makromer nach Anspruch 1, worin T $-CONH-R_5A-$ bedeutet und $R_5$ Ethylen darstellt und A Oxa bedeutet.

**8.** Makromer nach Anspruch 1, worin T $-CONH-R-NHCOOR_5A-$ darstellt und $R_5$ Ethylen bedeutet und R das Radikal, abgeleitet von Isophorondiisocyanat, ist und A Oxa darstellt.

**9.** Makromer nach Anspruch 1, worin E $-CO-C(R_1)=CHR_2$ bedeutet, wobei $R_1$ Methyl bedeutet und $R_2$ Wasserstoff darstellt.

**10.** Makromer nach Anspruch 1, worin E $-CONH-Phenyl-C(R_1)=CHR_2$ bedeutet, wobei $R_1$ und $R_2$ beide Wasserstoff darstellen.

**11.** Makromer nach Anspruch 1, wobei in G der Wert x 1 bedeutet und R ein Radikal, abgeleitet von Isophorondiisocyanat, ist.

**12.** Makromer nach Anspruch 1, wobei in La A Oxa bedeutet, R ein Radikal, abgeleitet von Isophorondiisocyanat, ist, z 1 bis 5 bedeutet und na 5 bis 100 ist.

**13.** Makromer nach Anspruch 1 mit der Formel (Ia) E-T-L-Q-X-Z-X-Q-L-T-E.

**14.** Makromer nach Anspruch 13, worin
E $-CO-C(CH_3)=CH_2$ bedeutet,
T $-CONH-CH_2CH_2-O-$ bedeutet,
L $-O(C_2H_4O)_nC_2H_4O-$ bedeutet, wobei n 19 bis 25 ist,
Q -OCONH-Isophoron-NHCO- bedeutet,
X $-CH_2-$ bedeutet, und
Z $-CF_2O(C_2F_4O)_r-(CF_2O)_s-CF_2$ bedeutet, wobei r:s im Bereich von 1:10 bis 5:1 liegt und vorzugsweise etwa 0,7 ist.

**15.** Makromer nach Anspruch 1, hergestellt durch Überkappen der Enden von
(a) $HOCH_2-(C_aF_{2a}O)_b-CF_2-CH_2OH$, worin a 1 bis 4 darstellt und b 2 bis 200 bedeutet mit
(b)

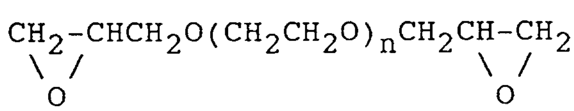

worin n 5 bis 100 bedeutet, gefolgt von Umsetzung mit
(c) 2-Isocyanatoethylmethacrylat, worin die Reaktanten a:b:c in einem Molverhältnis von 1:2:2 vorliegen.

**16.** Vernetztes Homopolymerisationsprodukt eines Makromers
E-T-L-Q-X-Z-X-Q-L-T-E oder
E-T-L-Q-X-G-X-Q-L-T-E nach Anspruch 1.

**17.** Vernetztes Produkt nach Anspruch 16, worin das Makromer E-T-L-Q-X-Z-X-Q-L-T-E darstellt, worin
E $-CO-C(CH_3)=CH_2$ bedeutet,
T $-CONH-CH_2CH_2-O-$ bedeutet,
L $-O(C_2H_4O)_nC_2H_4O-$ bedeutet, worin n 19 bis 25 darstellt,
Q -OCONH-Isophoron-NHCO- bedeutet,
X $-CH_2-$ bedeutet und
Z $-CF_2O(C_2F_4O)_r-(CF_2O)_s-CF_2$ bedeutet, worin r:s in dem Bereich von 1:10 bis 5:1 liegt und vorzugsweise etwa 0,7 ist.

**18.** Vernetztes Copolymerisationsprodukt des Makromers
E-T-L-Q-X-Z-X-Q-L-T-E oder E-T-L-Q-X-Z-X-Q-L nach Anspruch 1.

**19.** Produkt nach Anspruch 18, worin mehr als 1 % des Materials, vorzugsweise mehr als 10 % des Materials von dem Makromer E-T-L-Q-X-Z-X-Q-L-T-E abgeleitet sind.

**20.** Produkt nach Anspruch 18, worin mehr als 20 % des Materials, vorzugsweise mehr als 30 % des Materials von dem Makromer E-T-L-Q-X-Z-X-Q-L-T-E abgeleitet sind.

**21.** Vernetztes Homopolymerisationsprodukt des Makromers nach Anspruch 15.

**22.** Verfahren zur Herstellung einer Hydrogelkontaktlinse durch Vernetzen eines Makromers nach Anspruch 1 in einem inerten Lösungsmittel in einer Form durch Polymerisation über freie Radikale und Konditionieren der erhaltenen, in Lösungsmittel gequollenen, vernetzten Kontaktlinse in einem wässerigen Medium.

**23.** Verfahren nach Anspruch 22, wobei das Lösungsmittel ein Niederalkanol, N,N-Dimethylformamid, Acetamid, Acetonitril, N,N-Dimethylacetamid, Dimethylsulfoxid, Aceton, tert.-Butylacetat, Isopropylacetat oder Gemische davon ist.

**24.** Verfahren nach Anspruch 23, wobei das Lösungsmittel Isopropylacetat ist.

**25.** Ophthalmische Vorrichtung, hergestellt nach Anspruch 22.

**26.** Ophthalmische Vorrichtung, hergestellt aus dem Produkt nach Anspruch 16.

**27.** Ophthalmische Vorrichtung, hergestellt aus dem Produkt nach Anspruch 17.

**28.** Ophthalmische Vorrichtung, hergestellt aus dem Produkt nach Anspruch 18.

**29.** Ophthalmische Vorrichtung, hergestellt aus dem Produkt nach Anspruch 21.

**30.** Hydrogelkontaktlinse, hergestellt nach Anspruch 22.

**31.** Hydrogelkontaktlinse, hergestellt nach Anspruch 22 mit einem Wassergehalt größer 20 %, vorzugsweise mit einem Wassergehalt größer 30 %.

**32.** Hydrogelkontaktlinse, hergestellt nach Anspruch 22 mit einem Wassergehalt größer 40 %, vorzugsweise mit einem Wassergehalt größer 50 %.

**33.** Hydrogelkontaktlinse, hergestellt nach Anspruch 22 mit zwischen 25 und 55 % Wassergehalt.

**34.** Kontaktlinse nach Anspruch 26.

**35.** Kontaktlinse nach Anspruch 27.

**36.** Kontaktlinse nach Anspruch 28.

**37.** Kontaktlinse nach Anspruch 29.

**38.** Vernetztes Polymer, nämlich das Additionspolymerisationsprodukt von

(a) einem Makromer, enthaltend Perfluorpolyalkylether- und Polyalkylethersegmente und ethylenisch ungesättigte Reste, die die Formel I aufweisen, insbesondere wie in Formeln Ia bis Id ersichtlich,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

worin Z $-(C_aF_{2a}O)_b-CF_2-$ bedeutet, wobei a 1 bis 4 oder ein Gemisch davon bedeutet und b 2 bis 200 darstellt;

X eine direkte Bindung, $-CH_2-$, $-CH_2OCH_2CHOHCH_2-$, $-CH_2(OCH_2CH_2)_y-$ oder Carbonyl darstellt, wobei y 1 bis 10 ist;

Q eine direkte Bindung, -CONH-R-NHCO- oder -ACONH-R-NHCO- bedeutet, wobei A Oxa oder Imino bedeutet und R eine zweiwertige aliphatische Gruppe mit 2 bis 14 Kohlenstoffatomen, eine zweiwertige 5- oder 6-gliedrige cycloaliphatische Gruppe mit 5 bis 14 Kohlenstoffatomen oder eine Arylengruppe mit 6 bis 14 Kohlenstoffatomen darstellt und worin A von Q an X gebunden ist;

L $-A(C_mH_{2m}O)_nC_mH_{2m}AY$ oder La bedeutet, worin Y eine direkte Bindung darstellt, wenn L zweiwertig ist oder Wasserstoff bedeutet, wenn L einwertig ist und m 2 bis 4 oder ein Gemisch davon darstellt und n 5 bis 100 bedeutet; wobei A wie vorstehend definiert ist;

T $-CONH-R_5A-$ oder $-CONH-R-NHCOOR_5A-$ oder -CONH-R-NHCO-A- oder $-R_5A-$ oder eine direkte Bindung darstellt, wenn der Rest A davon an E gebunden ist, wobei $R_5$ Alkylen oder Hydroxy-substituiertes Alkylen mit 2 bis 15 Kohlenstoffatomen darstellt und A und R wie vorstehend definiert sind;

E $-CO-C(R_1)=CHR_2$ oder $-CONH-Phenyl-C(R_1)=CR_2H$ oder $-CONH-C(R_4)_2-Phenyl-C(R_1)-=CHR_2$ bedeutet,

worin $R_1$ Wasserstoff oder Methyl bedeutet, und $R_2$ Wasserstoff, Methyl oder $-COOR_3$ darstellt,

worin $R_3$ Wasserstoff oder Alkyl mit 1 bis 4 Kohlenstoffatomen darstellt, mit der Maßgabe, daß wenn $R_1$ Methyl bedeutet, $R_2$ Wasserstoff darstellt; und worin $R_4$ Wasserstoff oder Methyl bedeutet;

G $-(C_aF_{2a}O)_b-CF_2[CH_2-OCONH-R-NHCOOCH_2CF_2(OC_aF_{2a})_b]_x-$ oder $-(C_aF_{2a}O)_b-CF_2[CH_2-NHCONH-R-NHCONHCH_2CF_2(OC_aF_{2a})_b]_x-$ darstellt, worin x 1 bis 3 bedeutet; und a, b und R wie vorstehend definiert sind; und

La $-A(C_mH_{2m}O)_n[C_mH_{2m}ACONH-R-NHCOA(C_mH_{2m}O)_{na}]_zC_mH_{2m}AY$ darstellt, worin na 5 bis 100 bedeutet, z 1 bis 10 darstellt und Y eine direkte Bindung darstellt, wenn La zweiwertig oder Wasserstoff ist, wenn La einwertig ist und A, R, m und n wie vorstehend definiert sind und

(b) einem Vinylcomonomer, nämlich

(i) einem hydrophilen Vinylmonomer,

(ii) einem hydrophoben Vinylmonomer,

(iii) einem polyreaktiven Vernetzungsmittel,

oder (iv) einem Gemisch von einem oder mehreren von (i), (ii) und (iii).

**39.** Polymer nach Anspruch 38, worin das hydrophile Vinylmonomer ausgewählt ist aus Hydroxy-substituierten Niederalkylacrylaten und -methacrylaten, Acrylamid, Methacrylamid, $C_1$-$C_2$-Niederalkylacrylamid und -methacrylamid, ethoxylierten Acrylaten und -methacrylaten, Hydroxy-substituiertem Niederalkylacrylamid und -methacrylamid, Hydroxy-substituierten Niederalkylvinylethern, Natriumethylensulfonat, Natriumstyrolsulfonat, 2-Acrylamido-2-methylpropansulfonsäure, N-Vinylpyrrol, N-Vinylsuccinimid, N-Vinylpyrrolidon, 2- und 4-Vinylpyridin, Acrylsäure, Methacrylsäure, Amino- (Amino- schließt quaternäres Ammonium ein), Mononiederalkylamino-oder Diniederalkylaminoniederalkylacrylaten oder -methacrylaten und Allylalkohol; das hydrophobe Vinylmonomer ausgewählt ist aus $C_1$ bis $C_{18}$-Alkylacrylaten und -methacrylaten, $C_3$ bis $C_{18}$-Alkylacrylamiden und -methacrylamiden, Acrylnitril, Methacrylnitril, Vinyl-$C_1$ bis $C_{18}$-alkanoaten, $C_2$ bis $C_{18}$-Alkenen, $C_2$ bis $C_{18}$-Halogenalkenen, Styrol, $C_1$ bis $C_6$-Alkylstyrolen, Vinylalkylethern, worin der Alkylteil 1 bis 6 Kohlenstoffatome aufweist, $C_3$ bis $C_{12}$-Perfluoralkylethylthiocarbonylaminoethylacrylaten und -methacrylaten, $C_3$ bis $C_{12}$-Fluoralkylacrylaten und -methacrylaten, Acryloxy- und Methacryloxyalkylsiloxanen, N-Vinylcarbazol, $C_1$ bis $C_{12}$-Alkylestern von Malein-, Fumar-, Itacon- und Mesaconsäuren;

und das polyreaktive Vernetzungsmittel ausgewählt ist aus Allylmethacrylat, Diallylitaconat, Monoallylitaconat, Diallylmaleat, Diallylfumarat, Diallylsuccinat, Diallylphthalat, Triallylcyanurat, Triallylisocyanurat, Diethylenglycolbisallylcarbonat, Triallylphosphat, Triallyltrimellitat, Allylether, N,N-Diallylmelamin; Divinylbenzol, N,N'-Methylenbisacrylamid, Ethylenglycoldimethacrylat, Neopentylglycoldimethacrylat, Tetraethylenglycoldimethacrylat, Hexamethylenbismaleimid, Divinylharnstoff, Bisphenol A-bismethacrylat, Divinyladipat, Glycerintrimethacrylat, Trimethylolpropantriacrylat, Trivinyltrimellitat, 1,5-Pentadien, 1,3-Bis(4-methacryloxybutyl)tetramethyldisiloxan, Divinylethern, Divinylsulfon; und dem Dimethacrylat, gebildet durch Umsetzen von Perfluorpolyalkyletherdimethanol oder Poly(ethylenglycol) mit zwei Mol Isocyanatoethylmethacrylat.

**40.** Polymer nach Anspruch 38, wobei in Makromer (a) X $-CH_2-$ oder $-CH_2(OCH_2CH_2)_y-$ bedeutet, worin y 1 oder 2 ist.

**41.** Polymer nach Anspruch 38, wobei in Makromer (a) Q -ACONH-R-NHCO- bedeutet, wobei R ein Radikal, abgeleitet von Hexan-1,6-diisocyanat, Trimethylhexan-1,6-diisocyanat, Tetramethylendiisocyanat, Phenylen-1,4-diisocyanat, Toluol-2,4-diisocyanat, Toluol-2,6-diisocyanat, m- oder p-Tetramethylxyloldiisocyanat, Isophorondiisocyanat oder Cyclohexan-1,4-diisocyanat ist.

**42.** Polymer nach Anspruch 41, wobei R ein zweiwertiges Radikal, abgeleitet von Isophorondiisocyanat ist.

**43.** Polymer nach Anspruch 38, wobei in Makromer (a) a 1 oder 2 ist und b 3 bis 50 ist.

**44.** Polymer nach Anspruch 38, wobei in Makromer (a) L $-O(C_mH_{2m}O)_nC_mH_{2m}O-$ ist, worin m 2 oder ein Gemisch von 2 und 3 bedeutet und n 10 bis 50 ist.

**45.** Polymer nach Anspruch 38, wobei in Makromer (a) T $-CONH-R_5A-$ darstellt und $R_5$ Ethylen ist und A Oxa bedeutet.

**46.** Polymer nach Anspruch 38, wobei in Makromer (a) T $-CONH-R-NHCOOR_5A-$ bedeutet und $R_5$ Ethylen darstellt und R das Radikal, abgeleitet von Isophorondiisocyanat, darstellt und A Oxa bedeutet.

**47.** Polymer nach Anspruch 38, wobei in Makromer (a) E $-CO-C(R_1)=CHR_2$, worin $R_1$ Methyl ist und $R_2$ Wasserstoff ist, darstellt.

**48.** Polymer nach Anspruch 38, wobei in Makromer (a) E $-CONH-Phenyl-C(R_1)=CHR_2$, worin $R_1$ und $R_2$ beide Wasserstoff bedeuten, darstellt.

**49.** Polymer nach Anspruch 38, wobei in Makromer (a) x 1 ist und R ein Radikal, abgeleitet von Isophorondiisocyanat, darstellt.

**50.** Polymer nach Anspruch 38, wobei in La von Makromer (a) A Oxa bedeutet, R ein Radikal, abgeleitet von Isophorondiisocyanat, darstellt, z 1 bis 5 ist und na 5 bis 100 ist.

**51.** Polymer nach Anspruch 38, wobei das Makromer (a) die Formel (Ia) E-T-L-Q-X-Z-X-Q-L-T-E hat.

**52.** Polymer nach Anspruch 51, wobei in dem Makromer (a)
E $-CO-C(CH_3)=CH_2$ bedeutet,
T $-CONH-CH_2CH_2-O-$ bedeutet,
L $-O(C_2H_4O)_nC_2H_4O-$ bedeutet, worin n 19 bis 25 ist,
Q -OCONH-Isophoron-NHCO- bedeutet,
X $-CH_2-$ bedeutet, und
Z $-CF_2O(C_2F_4O)_r-(CF_2O)_sCF_2-$ bedeutet, worin r:s im Bereich von 1:10 bis 5:1 liegt und vorzugsweise etwa 0,7 ist.

**53.** Vernetztes Polymer nach Anspruch 38, worin (b) bis zu 10 Gew.-% beträgt.

**54.** Vernetztes Polymer nach Anspruch 53, worin (b) 2-Hydroxyethylmethacrylat, N-Vinylpyrrolidon, N,N-Dimethylacrylamid, Ethylenglycoldimethacrylat, das Reaktionsprodukt von Poly(ethylenglycol) mit zwei

Mol 2-Isocyanatoethylmethacrylat oder das Reaktionsprodukt von Perfluorpolyalkyletherdimethanol mit zwei Mol 2-Isocyanatoethylmethacrylat darstellt.

**55.** Verfahren zur Herstellung einer Hydrogelkontaktlinse durch Vernetzen eines Makromers (a) mit einem Vinylcomonomer (b) nach Anspruch 38 in einem inerten Lösungsmittel in einer Form durch Polymerisation mit freien Radikalen und Konditionieren der erhaltenen mit Lösungsmittel gequollenen Kontaktlinse in einem wässerigen Medium.

**56.** Verfahren nach Anspruch 55, wobei das Lösungsmittel ein Niederalkanol, N,N-Dimethylformamid, Acetamid, Acetonitril, N,N-Dimethylacetamid, Dimethylsulfoxid, Aceton, tert.-Butylacetat, Isopropylacetat oder Gemische davon, ist.

**57.** Verfahren nach Anspruch 56, wobei das Lösungsmittel Isopropylacetat ist.

**58.** Ophthalmische Vorrichtung, hergestellt nach Anspruch 55.

**59.** Ophthalmische Vorrichtung, hergestellt aus dem Produkt von Anspruch 38.

**60.** Ophthalmische Vorrichtung, hergestellt aus dem Produkt von Anspruch 51.

**61.** Ophthalmische Vorrichtung, hergestellt aus dem Produkt von Anspruch 52.

**62.** Ophthalmische Vorrichtung, hergestellt aus dem Produkt von Anspruch 53.

**63.** Ophthalmische Vorrichtung, hergestellt aus dem Produkt von Anspruch 54.

**64.** Kontaktlinse nach Anspruch 59.

**65.** Kontaktlinse nach Anspruch 60.

**66.** Kontaktlinse nach Anspruch 61.

**67.** Kontaktlinse nach Anspruch 62.

**68.** Kontaktlinse nach Anspruch 63.

**69.** Hydrogelkontaktlinse, hergestellt nach Anspruch 55.

**70.** Hydrogelkontaktlinse, hergestellt nach Anspruch 55, mit einem Wassergehalt größer 20 %, vorzugsweise mit einem Wassergehalt größer 30 %.

**71.** Hydrogelkontaktlinse, hergestellt nach Anspruch 55, mit einem Wassergehalt größer 40 %, vorzugsweise mit einem Wassergehalt größer 50 %.

**72.** Hydrogelkontaktlinse, hergestellt nach Anspruch 55, mit einem Wassergehalt zwischen 25 und 55 %.

**73.** Verwendung eines Makromers nach Anspruch 1 zur Herstellung einer Kontaktlinse.

**74.** Verwendung eines Polymers nach Anspruch 38 zur Herstellung einer Kontaktlinse.

**Patentansprüche für folgenden Vertragsstaat : ES**

**1.** Verfahren zur Herstellung eines Makromers, enthaltend Perfluorpolyalkylether- und Polyalkylethersegmente und ethylenisch ungesättigte Reste, die die Formel I aufweisen, insbesondere wie in Formeln Ia bis Id ersichtlich,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

worin Z $-(C_aF_{2a}O)_b-CF_2-$ bedeutet, wobei a 1 bis 4 oder ein Gemisch davon bedeutet und b 2 bis 200 darstellt;

X eine direkte Bindung, $-CH_2-$, $-CH_2OCH_2CHOHCH_2-$, $-CH_2(OCH_2CH_2)_y-$ oder Carbonyl darstellt, wobei y 1 bis 10 ist;

Q eine direkte Bindung, -CONH-R-NHCO- oder -ACONH-R-NHCO- bedeutet, wobei A Oxa oder Imino bedeutet und R eine zweiwertige aliphatische Gruppe mit 2 bis 14 Kohlenstoffatomen, eine zweiwertige 5- oder 6-gliedrige cycloaliphatische Gruppe mit 5 bis 14 Kohlenstoffatomen oder eine Arylengruppe mit 6 bis 14 Kohlenstoffatomen darstellt und worin A von Q an X gebunden ist;

L $-A(C_mH_{2m}O)_nC_mH_{2m}AY$ oder La bedeutet, worin Y eine direkte Bindung darstellt, wenn L zweiwertig ist oder Wasserstoff bedeutet; wenn L einwertig ist und m 2 bis 4 oder ein Gemisch davon darstellt und n 5 bis 100 bedeutet; wobei A wie vorstehend definiert ist;

T $-CONH-R_5A-$ oder $-CONH-R-NHCOOR_5A-$ oder -CONH-R-NHCO-A- oder $-R_5A-$oder eine direkte Bindung darstellt, wenn der Rest A davon an E gebunden ist, wobei $R_5$ Alkylen oder Hydroxy-substituiertes Alkylen mit 2 bis 15 Kohlenstoffatomen darstellt und A und R wie vorstehend definiert sind;

E $-CO-C(R_1)=CHR_2$ oder $-CONH-Phenyl-C(R_1)=CR_2H$ oder $-CONH-C(R_4)_2-Phenyl-C(R_1)=CHR_2$ bedeutet,

worin $R_1$ Wasserstoff oder Methyl bedeutet, und $R_2$ Wasserstoff, Methyl oder $-COOR_3$ darstellt,

worin $R_3$ Wasserstoff oder Alkyl mit 1 bis 4 Kohlenstoffatomen darstellt, mit der Maßgabe, daß wenn $R_1$ Methyl bedeutet, $R_2$ Wasserstoff darstellt; und worin $R_4$ Wasserstoff oder Methyl bedeutet;

G $-(C_aF_{2a}O)_b-CF_2[CH_2-OCONH-R-NHCOOCH_2CF_2(OC_aF_{2a})_b]_x-$ oder $-(C_aF_{2a}O)_b-CF_2[CH_2-NHCONH-R-NHCONHCH_2CF_2(OC_aF_{2a})_b]_x-$ darstellt,

worin x 1 bis 3 bedeutet; und a, b und R wie vorstehend definiert sind; und

La $-A(C_mH_{2m}O)_n[C_mH_{2m}ACONH-R-NHCOA(C_mH_{2m}O)_{na}]_zC_mH_{2m}AY$ darstellt, worin na 5 bis 100 bedeutet, z 1 bis 10 darstellt und Y eine direkte Bindung darstellt, wenn La zweiwertig ist oder Wasserstoff ist, wenn La einwertig ist und A, R, m und n wie vorstehend definiert sind; dadurch gekennzeichnet, daß entsprechende Ausgangsmaterialien in an sich bekannter Weise umgesetzt werden.

**2.** Verfahren nach Anspruch 1, wobei X $-CH_2-$ oder $-CH_2(OCH_2CH_2)_y-$, wobei y 1 oder 2 ist, bedeutet.

**3.** Verfahren nach Anspruch 1, wobei Q -ACONH-R-NHCO- bedeutet, worin R das Radikal, abgeleitet von Hexan-1,6-diisocyanat, Trimethylhexan-1,6-diisocyanat, Tetramethylendiisocyanat, Phenylen-1,4-diisocyanat, Toluol-2,4-diisocyanat, Toluol-2,6-diisocyanat, m- oder p-Tetramethylxyloldiisocyanat, Isophorondiisocyanat oder Cyclohexan-1,4-diisocyanat darstellt.

**4.** Verfahren nach Anspruch 3, wobei R ein zweiwertiges Radikal, abgeleitet von Isophorondiisocyanat, ist.

**5.** Verfahren nach Anspruch 1, wobei in Z a 1 oder 2 ist und b 3 bis 50 ist.

**6.** Verfahren nach Anspruch 1, wobei L $-O(C_mH_{2m}O)_nC_mH_{2m}O-$ bedeutet, worin m 2 oder ein Gemisch von 2 und 3 darstellt und n 10 bis 50 ist.

**7.** Verfahren nach Anspruch 1, wobei T $-CONH-R_5A-$ bedeutet und $R_5$ Ethylen darstellt und A Oxa bedeutet.

**8.** Verfahren nach Anspruch 1, wobei T $-CONH-R-NHCOOR_5A-$ darstellt und $R_5$ Ethylen bedeutet und R das Radikal, abgeleitet von Isophorondiisocyanat, ist und A Oxa darstellt.

**9.** Verfahren nach Anspruch 1, wobei E $-CO-C(R_1)=CHR_2$ bedeutet, wobei $R_1$ Methyl bedeutet und $R_2$ Wasserstoff darstellt.

**10.** Verfahren nach Anspruch 1, wobei E -CONH-Phenyl-C($R_1$) = $CHR_2$ bedeutet, worin $R_1$ und $R_2$ beide Wasserstoff darstellen.

**11.** Verfahren nach Anspruch 1, wobei in G der Wert x 1 bedeutet und R ein Radikal, abgeleitet von Isophorondiisocyanat, ist.

**12.** Verfahren nach Anspruch 1, wobei in La A Oxa bedeutet, R ein Radikal, abgeleitet von Isophorondiisocyanat, ist, z 1 bis 5 bedeutet und na 5 bis 100 ist.

**13.** Verfahren nach Anspruch 1, wobei eine Verbindung mit der Formel (Ia)
E-T-L-Q-X-Z-X-Q-L-T-E hergestellt wird.

**14.** Verfahren nach Anspruch 13, wobei
E -CO-C($CH_3$) = $CH_2$ bedeutet,
T -CONH-$CH_2CH_2$-O- bedeutet,
L -O($C_2H_4O$)$_n$$C_2H_4$O- bedeutet, wobei n 19 bis 25 ist,
Q -OCONH-Isophoron-NHCO- bedeutet,
X -$CH_2$- bedeutet, und
Z -$CF_2O(C_2F_4O)_r$-$(CF_2O)_s$-$CF_2$ bedeutet, wobei r:s im Bereich von 1:10 bis 5:1 liegt und vorzugsweise etwa 0,7 ist.

**15.** Verfahren nach Anspruch 1, gekennzeichnet durch Überkappen der Enden von
(a) $HOCH_2$-$(C_aF_{2a}O)_b$-$CF_2$-$CH_2OH$, worin a 1 bis 4 darstellt und b 2 bis 200 bedeutet mit
(b)

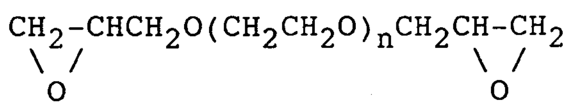

worin n 5 bis 100 bedeutet, gefolgt von Umsetzung mit
(c) 2-Isocyanatoethylmethacrylat, worin die Reaktanten a:b:c in einem Molverhältnis von 1:2:2 vorliegen.

**16.** Verfahren zur Herstellung eines vernetzten Homopolymerisationsprodukts, dadurch gekennzeichnet, daß ein Makromer
E-T-L-Q-X-Z-X-Q-L-T-E oder
E-T-L-Q-X-G-X-Q-L-T-E nach Anspruch 1 in an sich bekannter Weise homopolymerisiert wird.

**17.** Verfahren nach Anspruch 16, wobei das Makromer E-T-L-Q-X-Z-X-Q-L-T-E darstellt, worin
E -CO-C($CH_3$) = $CH_2$ bedeutet,
T -CONH-$CH_2CH_2$-O- bedeutet,
L -O($C_2H_4O$)$_n$$C_2H_4$O- bedeutet, worin n 19 bis 25 darstellt,
Q -OCONH-Isophoron-NHCO- bedeutet,
X -$CH_2$- bedeutet und
Z -$CF_2O(C_2F_4O)_r$-$(CF_2O)_s$-$CF_2$ bedeutet, worin r:s in dem Bereich von 1:10 bis 5:1 liegt und vorzugsweise etwa 0,7 ist.

**18.** Verfahren zur Herstellung eines vernetzten Copolymerisationsprodukts, dadurch gekennzeichnet, daß ein Makromer
E-T-L-Q-X-Z-X-Q-L-T-E oder E-T-L-Q-X-Z-X-Q-L nach Anspruch 1, in an sich bekannter Weise copolymerisiert wird.

**19.** Verfahren nach Anspruch 18, wobei mehr als 1 % des Materials, vorzugsweise mehr als 10 % des Materials von dem Makromer E-T-L-Q-X-Z-X-Q-L-T-E abgeleitet sind.

**20.** Verfahren nach Anspruch 18, wobei mehr als 20 % des Materials, vorzugsweise mehr als 30 % des Materials von dem Makromer E-T-L-Q-X-Z-X-Q-L-T-E abgeleitet sind.

21. Verfahren zum Erhalt eines vernetzten Homopolymerisationsprodukts des Makromers nach Anspruch 15 in an sich bekannter Weise.

22. Verfahren zur Herstellung einer Hydrogelkontaktlinse durch Vernetzen eines Makromers nach Anspruch 1 in einem inerten Lösungsmittel in einer Form durch Polymerisation über freie Radikale und Konditionieren der erhaltenen, in Lösungsmittel gequollenen, vernetzten Kontaktlinse in einem wässerigen Medium.

23. Verfahren nach Anspruch 22, wobei das Lösungsmittel ein Niederalkanol, N,N-Dimethylformamid, Acetamid, Acetonitril, N,N-Dimethylacetamid, Dimethylsulfoxid, Aceton, tert.-Butylacetat, Isopropylacetat oder Gemische davon ist.

24. Verfahren nach Anspruch 23, wobei das Lösungsmittel Isopropylacetat ist.

25. Ophthalmische Vorrichtung, hergestellt nach Anspruch 22.

26. Ophthalmische Vorrichtung, hergestellt aus dem Produkt nach Anspruch 16.

27. Ophthalmische Vorrichtung, hergestellt aus dem Produkt nach Anspruch 17.

28. Ophthalmische Vorrichtung, hergestellt aus dem Produkt nach Anspruch 18.

29. Ophthalmische Vorrichtung, hergestellt aus dem Produkt nach Anspruch 21.

30. Hydrogelkontaktlinse, hergestellt nach Anspruch 22.

31. Hydrogelkontaktlinse, hergestellt nach Anspruch 22 mit einem Wassergehalt größer 20 %, vorzugsweise mit einem Wassergehalt größer 30 %.

32. Hydrogelkontaktlinse, hergestellt nach Anspruch 22 mit einem Wassergehalt größer 40 %, vorzugsweise mit einem Wassergehalt größer 50 %.

33. Hydrogelkontaktlinse, hergestellt nach Anspruch 22 mit zwischen 25 und 55 % Wassergehalt.

34. Kontaktlinse nach Anspruch 26.

35. Kontaktlinse nach Anspruch 27.

36. Kontaktlinse nach Anspruch 28.

37. Kontaktlinse nach Anspruch 29.

38. Verfahren zur Herstellung eines vernetzten Polymers, nämlich das Additionspolymerisationsprodukt von (a) einem Makromer, enthaltend Perfluorpolyalkylether- und Polyalkylethersegmente und ethylenisch ungesättigte Reste, die die Formel I aufweisen, insbesondere wie in Formeln Ia bis Id ersichtlich,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

worin Z $-(C_aF_{2a}O)_b-CF_2-$ bedeutet, wobei a 1 bis 4 oder ein Gemisch davon bedeutet und b 2 bis 200 darstellt;

X eine direkte Bindung, $-CH_2-$, $-CH_2OCH_2CHOHCH_2-$, $-CH_2(OCH_2CH_2)_y-$ oder Carbonyl darstellt, wobei y 1 bis 10 ist;

Q eine direkte Bindung, -CONH-R-NHCO- oder -ACONH-R-NHCO- bedeutet, wobei A Oxa oder Imino bedeutet und R eine zweiwertige aliphatische Gruppe mit 2 bis 14 Kohlenstoffatomen, eine zweiwertige 5- oder 6-gliedrige cycloaliphatische Gruppe mit 5 bis 14 Kohlenstoffatomen oder eine Arylengruppe mit 6 bis 14 Kohlenstoffatomen darstellt und worin A von Q an X gebunden ist;

L $-A(C_mH_{2m}O)_nC_mH_{2m}AY$ oder La bedeutet, worin Y eine direkte Bindung darstellt, wenn L zweiwertig ist oder Wasserstoff bedeutet; wenn L einwertig ist und m 2 bis 4 oder ein Gemisch davon darstellt und n 5 bis 100 bedeutet; wobei A wie vorstehend definiert ist;

T $-CONH-R_5A-$ oder $-CONH-R-NHCOOR_5A-$ oder -CONH-R-NHCO-A- oder - $R_5A-$ oder eine direkte Bindung darstellt, wenn der Rest A davon an E gebunden ist, wobei $R_5$ Alkylen oder Hydroxy-substituiertes Alkylen mit 2 bis 15 Kohlenstoffatomen darstellt und A und R wie vorstehend definiert sind;

E $-CO-C(R_1)=CHR_2$ oder $-CONH-Phenyl-C(R_1)=CR_2H$ oder $-CONH-C(R_4)_2-Phenyl-C(R_1)-=CHR_2$ bedeutet,

worin $R_1$ Wasserstoff oder Methyl bedeutet, und $R_2$ Wasserstoff, Methyl oder $-COOR_3$ darstellt,

worin $R_3$ Wasserstoff oder Alkyl mit 1 bis 4 Kohlenstoffatomen darstellt, mit der Maßgabe, daß wenn $R_1$ Methyl bedeutet, $R_2$ Wasserstoff darstellt; und worin $R_4$ Wasserstoff oder Methyl bedeutet;

G $-(C_aF_{2a}O)_b-CF_2[CH_2-OCONH-R-NHCOOCH_2CF_2(OC_aF_{2a})_b]_x-$ oder $-(C_aF_{2a}O)_b-CF_2[CH_2-NHCONH-R-NHCONHCH_2CF_2(OC_aF_{2a})_b]_x-$ darstellt,

worin x 1 bis 3 bedeutet; und a, b und R wie vorstehend definiert sind; und

La $-A(C_mH_{2m}O)_n[C_mH_{2m}ACONH-R-NHCOA(C_mH_{2m}O)_{na}]_zC_mH_{2m}AY$ darstellt, worin na 5 bis 100 bedeutet, z 1 bis 10 darstellt und Y eine direkte Bindung darstellt, wenn La zweiwertig ist oder Wasserstoff ist, wenn La einwertig ist und A, R, m und n wie vorstehend definiert sind und

(b) einem Vinylcomonomer, nämlich

(i) einem hydrophilen Vinylmonomer,

(ii) einem hydrophoben Vinylmonomer,

(iii) einem polyreaktiven Vernetzungsmittel,

oder (iv) einem Gemisch von einem oder mehreren von (i), (ii) und (iii); gekennzeichnet durch übliches Copolymerisieren des Makromers und einem oder mehreren Vinylcomonomeren, wie vorstehend definiert.

**39.** Verfahren nach Anspruch 38, wobei das hydrophile Vinylmonomer ausgewählt ist aus Hydroxy-substituierten Niederalkylacrylaten und -methacrylaten, Acrylamid, Methacrylamid, $C_1$-$C_2$-Niederalkylacrylamid und -methacrylamid, ethoxylierten Acrylaten und Methacrylaten, Hydroxy-substituiertem Niederalkylacrylamid und -methacrylamid, Hydroxy-substituierten Niederalkylvinylethern, Natriumethylensulfonat, Natriumstyrolsulfonat, 2-Acrylamido-2-methylpropansulfonsäu-re, N-Vinylpyrrol, N-Vinylsuccinimid, N-Vinylpyrrolidon, 2- und 4-Vinylpyridin, Acrylsäure, Methacrylsäure, Amino (Amino-, schließt quaternäres Ammonium ein), -mononiederalkylamino- oder Diniederalkylaminoniederalkylacrylaten oder -methacrylaten und Allylalkohol; das hydrophobe Vinylmonomer ausgewählt ist aus $C_1$ bis $C_{18}$-Alkylacrylaten und -methacrylaten, $C_3$ bis $C_{18}$-Alkylacrylamiden und -methacrylamiden, Acrylnitril, Methacrylnitril, Vinyl-$C_1$ bis $C_{18}$-alkanoaten, $C_2$ bis $C_{18}$-Alkenen, $C_2$ bis $C_{18}$-Halogenalkenen, Styrol, $C_1$ bis $C_6$-Alkylstyrolen, Vinylalkylethern, worin der Alkylanteil 1 bis 6 Kohlenstoffatome aufweist, $C_3$ bis $C_{12}$-Perfluoralkylethylthiocarbonylaminoethylacrylaten und -methacrylaten, $C_3$ bis $C_{12}$-Fluoralkylacrylaten und -methacrylaten, Acryloxy- und Methacryloxyalkylsiloxanen, N-Vinylcarbazol, $C_1$ bis $C_{12}$-Alkylestern von Malein-, Fumar-, Itacon- und Mesaconsäuren;

und das polyreaktive Vernetzungsmittel ausgewählt ist aus Allylmethacrylat, Diallylitaconat, Monoallylitaconat, Diallylmaleat, Diallylfumarat, Diallylsuccinat, Diallylphthalat, Triallylcyanurat, Triallylisocyanurat, Diethylenglycolbisallylcarbonat, Triallylphosphat, Triallyltrimellitat, Allylether, N,N-Diallylmelamin; Divinylbenzol, N,N'-Methylenbisacrylamid, Ethylenglycoldimethacrylat, Neopentylglycoldimethacrylat, Tetraethylenglycoldimethylacrylat, Hexamethylenbismaleimid, Divinylharnstoff, Bisphenol A-bismethacrylat, Divinyladipat, Glycerintrimethacrylat, Trimethylolpropantriacrylat, Trivinyltrimellitat, 1,5-Pentadien, 1,3-Bis(4-methacryloxybutyl)tetramethyldisiloxan, Divinylethern, Divinylsulfon; und dem Dimethacrylat, gebildet durch Umsetzen von Perfluorpolyalkyletherdimethanol oder Poly(ethylenglycol) mit zwei Mol Isocyanatoethylmethacrylat.

**40.** Verfahren nach Anspruch 38, wobei in Makromer (a) X $-CH_2-$ oder $-CH_2(OCH_2CH_2)_y-$ bedeutet, worin y 1 oder 2 ist.

41. Verfahren nach Anspruch 38, wobei in Makromer (a) Q -ACONH-R-NHCO- bedeutet, wobei R ein Radikal, abgeleitet von Hexan-1,6-diisocyanat, Trimethylhexan-1,6-diisocyanat, Tetramethylendiisocyanat, Phenylen-1,4-diisocyanat, Toluol-2,4-diisocyanat, Toluol-2,6-diisocyanat, m- oder p-Tetramethylxyloldiisocyanat, Isophorondiisocyanat oder Cyclohexan-1,4-diisocyanat ist.

42. Verfahren nach Anspruch 41, wobei R ein zweiwertiges Radikal, abgeleitet von Isophorondiisocyanat ist.

43. Verfahren nach Anspruch 38, wobei in Makromer (a) a 1 oder 2 ist und b 3 bis 50 ist.

44. Verfahren nach Anspruch 38, wobei in Makromer (a) L $-O(C_mH_{2m}O)_nC_mH_{2m}O-$ ist, worin m 2 oder ein Gemisch von 2 und 3 bedeutet und n 10 bis 50 ist.

45. Verfahren nach Anspruch 38, wobei in Makromer (a) T $-CONH-R_5A-$ darstellt und $R_5$ Ethylen ist und A Oxa bedeutet.

46. Verfahren nach Anspruch 38, wobei in Makromer (a) T $-CONH-R-NHCOOR_5A-$ bedeutet und $R_5$ Ethylen darstellt und R das Radikal, abgeleitet von Isophorondiisocyanat, darstellt und A Oxa bedeutet.

47. Verfahren nach Anspruch 38, wobei in Makromer (a) E $-CO-C(R_1)=CHR_2$, worin $R_1$ Methyl ist und $R_2$ Wasserstoff ist, darstellt.

48. Verfahren nach Anspruch 38, wobei in Makromer (a) E $-CONH$-Phenyl-$C(R_1)=CHR_2$, worin $R_1$ und $R_2$ beide Wasserstoff bedeuten, darstellt.

49. Verfahren nach Anspruch 38, wobei in Makromer (a) x 1 ist und R ein Radikal, abgeleitet von Isophorondiisocyanat, darstellt.

50. Verfahren nach Anspruch 38, wobei in La von Makromer (a) A Oxa bedeutet, R ein Radikal, abgeleitet von Isophorondiisocyanat, darstellt, z 1 bis 5 ist und na 5 bis 100 ist.

51. Verfahren nach Anspruch 38, wobei das Makromer (a) die Formel E-T-L-Q-X-Z-X-Q-L-T-E hat.

52. Verfahren nach Anspruch 51, wobei in dem Makromer (a)
E $-CO-C(CH_3)=CH_2$ bedeutet,
T $-CONH-CH_2CH_2-O-$ bedeutet,
L $-O(C_2H_4O)_nC_2H_4O-$ bedeutet, worin n 19 bis 25 ist,
Q -OCONH-Isophoron-NHCO- bedeutet, X $-CH_2-$ bedeutet, und
Z $-CF_2O(C_2F_4O)_r-(CF_2O)_s-CF_2-$ bedeutet, worin r:s im Bereich von 1:10 bis 5:1 liegt und vorzugsweise etwa 0,7 ist.

53. Verfahren nach Anspruch 38, wobei (b) bis zu 10 Gew.-% beträgt.

54. Verfahren nach Anspruch 53, wobei (b) 2-Hydroxyethylmethacrylat, N-Vinylpyrrolidon, N,N-Dimethylacrylamid, Ethylenglycoldimethacrylat, das Reaktionsprodukt von Poly(ethylenglycol) mit zwei Mol 2-Isocyanatoethylmethacrylat oder das Reaktionsprodukt von Perfluorpolyalkyletherdimethanol mit zwei Mol 2-Isocyanatoethylmethacrylat darstellt.

55. Verfahren zur Herstellung einer Hydrogelkontaktlinse durch Vernetzen eines Makromers (a) mit einem Vinylcomonomer (b) nach Anspruch 38 in einem inerten Lösungsmittel in einer Form durch Polymerisation mit freien Radikalen und Konditionieren der erhaltenen mit Lösungsmittel gequollenen Kontaktlinse in einem wässerigen Medium.

56. Verfahren nach Anspruch 55, wobei das Lösungsmittel ein Niederalkanol, N,N-Dimethylformamid, Acetamid, Acetonitril, N,N-Dimethylacetamid, Dimethylsulfoxid, Aceton, tert.-Butylacetat, Isopropylacetat oder Gemische davon, ist.

57. Verfahren nach Anspruch 56, wobei das Lösungsmittel Isopropylacetat ist.

**58.** Ophthalmische Vorrichtung, hergestellt nach Anspruch 55.

**59.** Ophthalmische Vorrichtung, hergestellt aus dem Produkt von Anspruch 38.

**60.** Ophthalmische Vorrichtung, hergestellt aus dem Produkt von Anspruch 51.

**61.** Ophthalmische Vorrichtung, hergestellt aus dem Produkt von Anspruch 52.

**62.** Ophthalmische Vorrichtung, hergestellt aus dem Produkt von Anspruch 53.

**63.** Ophthalmische Vorrichtung, hergestellt aus dem Produkt von Anspruch 54.

**64.** Kontaktlinse nach Anspruch 59.

**65.** Kontaktlinse nach Anspruch 60.

**66.** Kontaktlinse nach Anspruch 61.

**67.** Kontaktlinse nach Anspruch 62.

**68.** Kontaktlinse nach Anspruch 63.

**69.** Hydrogelkontaktlinse, hergestellt nach Anspruch 55.

**70.** Hydrogelkontaktlinse, hergestellt nach Anspruch 55, mit einem Wassergehalt größer 20 %, vorzugsweise mit einem Wassergehalt größer 30 %.

**71.** Hydrogelkontaktlinse, hergestellt nach Anspruch 55, mit einem Wassergehalt größer 40 %, vorzugsweise mit einem Wassergehalt größer 50 %.

**72.** Hydrogelkontaktlinse, hergestellt nach Anspruch 55, mit einem Wassergehalt zwischen 25 und 55 %.

**73.** Verwendung eines Makromers nach Anspruch 1 zur Herstellung einer Kontaktlinse.

**74.** Verwendung eines Polymers nach Anspruch 38 zur Herstellung einer Kontaktlinse.

**Revendications**

**Revendications pour les Etats contractants suivants : AT, BE, CH, DE, DK, FR, GB, GR, IT, LI, LU, NL, SE**

**1.** Macromère contenant des segments perfluoropolyalkyléther et des segments polyalkyléther et des portions éthyléniquement insaturées, ayant la formule I, plus spécifiquement comme montré dans les formules Ia à Id

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

où
Z est $(C_aF_{2a}O)_b$-$CF_2$-, dans laquelle a est de 1 à 4 ou un mélange de ceux-ci et b est de 2 à 200;
X est une liaison directe, -$CH_2$-, -$CH_2OCH_2CHOHCH_2$-, -$CH_2(OCH_2CH_2)_y$-ou un carbonyle dans lequel y est de 1 à 10;
Q est une liaison directe, -CONH-R-NHCO- ou -ACONH-R-NHCO-où A est un oxa ou un imino
et R est un groupe aliphatique divalent ayant de 2 à 14 atomes de carbone, un groupe cycloaliphatique

divalent à 5 ou 6 chaînons ayant de 5 à 14 atomes de carbone ou un groupe arylène ayant de 6 à 14 atomes de carbone, et dans lequel le A de Q est fixé à X;
L est $-A(C_mH_{2m}O)_nC_mH_{2m}AY$ ou La, où Y est une liaison directe si L est divalent, ou l'hydrogène, si L est monovalent, et m est de 2 à 4 ou un mélange de ceux-ci et n est de 5 à 100; où A est tel que défini ci-dessus ;
T est $-CONH-R_5A-$ ou $-CONH-R-NHCOOR_5A-$ ou -CONH-R-NHCO-A- ou $-R_5A-$ ou une liaison directe si A est ici fixé à E, lorsque $R_5$ est un alkylène ou un alkylène hydroxy substitué ayant de 2 à 15 atomes de carbone, et A et R sont tels que définis précédemment;
E est $-CO-C(R_1)=CHR_2$ ou $-CONH-phényl-C(R_1)=CR_2H$ ou $-CONH-C(R_4)_2-phényl-C(R_1)=CHR_2$ où $R_1$ est l'hydrogène ou le méthyle, et $R_2$ est l'hydrogène, le méthyle ou - $COOR_3$, où $R_3$ est l'hydrogène ou un alkyle ayant de 1 à 4 atomes de carbone à la condition que si $R_1$ est le méthyle, $R_2$ est l'hydrogène ; et où $R_4$ est l'hydrogène ou le méthyle; G est $-(C_aF_{2a}O)_b-CF_2[CH_2-OCONH-R-NHCOOCH_2CF_2(OC_aF_{2a})_b]_x-$ ou $-(C_aF_{2a}O)_b-CF_2[CH_2-NHCONH-R-NHCONHCH_2CF_2(OC_aF_{2a})_b]_x-$ où x est de 1 à 3 ; et a, b et R sont tels que ci-dessus ; et
La est $-A(C_mH_{2m}O)_n[C_mH_{2m}ACONH-R-NHCOA(C_mH_{2m}O)_{na}]_zC_mH_{2m}AY$
où na est de 5 à 100, z est de 1 à 10 et Y est une liaison directe si La est divalent, ou l'hydrogène si La est monovalent, et A, R, m et n sont tels que définis précédemment.

**2.** Macromère selon la revendication 1, où X est $-CH_2-$ ou $-CH_2(OCH_2CH_2)_y-$où y est 1 ou 2.

**3.** Macromère selon la revendication 1, où Q est -ACONH-R-NHCO- où R est le radical dérivé de l'hexane-1,6-diisocyanate, du triméthyl-hexane-1,6-diisocyanate, du tétraméthylène-diisocyanate, du phénylène-1,4-diisocyanate, du toluène-2,4-diisocyanate, du toluène-2,6-diisocyanate, du m- ou p-tétraméthylxylènediisocyanate, de l'isophorone-diisocyanate ou du cyclohexane-1,4-diisocyanate.

**4.** Macromère selon la revendication 3, où R est le radical divalent dérivé de l'isophorone-diisocyanate.

**5.** Macromère selon la revendication 1, où dans Z a est 1 ou 2, et b est de 3 à 50.

**6.** Macromère selon la revendication 1, où L est $-O(C_mH_{2m}O)_nC_mH_{2m}O-$ où m est 2 ou un mélange de 2 et 3, et n est 10-50.

**7.** Macromère selon la revendication 1, où T est $-CONH-R_5A-$et $R_5$ est l'éthylène et A est un oxa.

**8.** Macromère selon la revendication 1, où T est $-CONH-R-NHCOOR_5A-$et $R_5$ est l'éthylène et R est le radical dérivé de l'isophorone-diisocyanate et A est un oxa.

**9.** Macromère selon la revendication 1, où E est $-CO-C(R_1)=CHR_2$ où $R_1$ est le méthyle et $R_2$ est l'hydrogène.

**10.** Macromère selon la revendication 1, où E est $-CONH-phényl-C(R_1)=CHR_2$ où $R_1$ et $R_2$ sont tous les deux l'hydrogène.

**11.** Macromère selon la revendication 1, où, dans G, x est 1, et R est un radical dérivé de l'isophorone-diisocyanate.

**12.** Macromère selon la revendication 1, où, dans La, A est un oxa, R est un radical dérivé de l'isophorone-diisocyanate, z est de 1 à 5 et na est de 5 à 100.

**13.** Macromère selon la revendication 1, ayant la formule (Ia) E-T-L-Q-X-Z-X-Q-L-T-E.

**14.** Macromère selon la revendication 13, où
E est $-CO-C(CH_3)=CH_2$,
T est $-CONH-CH_2CH_2-O-$,
L est $-O(C_2H_4O)_nC_2H_4O-$ où n est 19-25,
Q est -OCONH-isophorone-NHCO-,
X est$-CH_2-$, et
Z est $-CF_2O(C_2F_4O)_r-(CF_2O)_s-CF_2$ où

r:s est dans le domaine de 1:10 à 5:1 et il est de préférence d'environ 0,7.

**15.** Macromère selon la revendication 1 préparé par un couronnement d'extrémité de
(a) $HOCH_2-(C_aF_{2a}O)_b-CF_2-CH_2OH$ où a est de 1 à 4 et b est de 2 à 200 avec
(b)

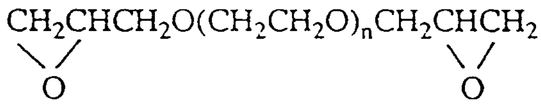

où n est de 5 à 100, suivi d'une réaction avec
(c) le méthacrylate de 2-isocyanatoéthyle où les réactifs a:b:c sont dans un rapport molaire 1:2:2.

**16.** Produit réticulé d'homopolymérisation d'un macromère
E-T-L-Q-X-Z-X-Q-L-T-E ou
E-T-L-Q-X-G-X-Q-L-T-E
selon la revendication 1.

**17.** Produit réticulé selon la revendication 16, où le macromère est E-T-L-Q-X-Z-X-Q-L-T-E où
E est $-CO-C(CH_3)=CH_2$,
T est $-CONH-CH_2CH_2-O-$,
L est $-O(C_2H_4O)_nC_2H_4O-$ où n est 19-25,
Q est -OCONH-isophorone-NHCO-,
X est $-CH_2-$, et
Z est $-CF_2O(C_2F_4O)_r-(CF_2O)_s-CF_2$ où
r:s est dans le domaine de 1:10 à 5:1 et il est de préférence d'environ 0,7.

**18.** Produit réticulé de copolymérisation du macromère
E-T-L-Q-X-Z-X-Q-L-T-E ou
E-T-L-Q-X-Z-X-Q-L
selon la revendication 1.

**19.** Produit selon la revendication 18, où plus de 1 % de la matière, de préférence plus de 10 % de la matière, est dérivé du macromère E-T-L-Q-X-Z-X-Q-L-T-E.

**20.** Produit selon la revendication 18, où plus de 20 % de la matière, de préférence plus de 30 % de la matière, est dérivé du macromère E-T-L-Q-X-Z-X-Q-L-T-E.

**21.** Produit réticulé d'homopolymérisation du macromère de la revendication 15.

**22.** Procédé pour préparer une lentille de contact en hydrogel en réticulant un macromère selon la revendication 1 dans un solvant inerte dans un moule par polymérisation à radicaux libres et par équilibrage de la lentille de contact réticulée résultante, gonflée par un solvant, dans un milieu aqueux.

**23.** Procédé selon la revendication 22, où le solvant est un alcanol inférieur, le N,N-diméthylformamide, l'acétamide, l'acétonitrile, le N,N-diméthylacétamide, le diméthylsulfoxyde, l'acétone, l'acétate de tert-butyle, l'acétate d'isopropyle ou leurs mélanges.

**24.** Procédé selon la revendication 23 où le solvant est l'acétate d'isopropyle.

**25.** Dispositif ophtalmique fait selon la revendication 22.

**26.** Dispositif ophtalmique préparé à partir du produit de la revendication 16.

**27.** Dispositif ophtalmique préparé à partir du produit de la revendication 17.

**28.** Dispositif ophtalmique préparé à partir du produit de la revendication 18.

**29.** Dispositif ophtalmique préparé à partir du produit de la revendication 21.

**30.** Lentille de contact en hydrogel faite selon la revendication 22.

**31.** Lentille de contact en hydrogel faite selon la revendication 22 qui comporte plus de 20 % d'eau, de préférence plus de 30 % d'eau.

**32.** Lentille de contact en hydrogel faite selon la revendication 22 qui comporte plus de 40 % d'eau, de préférence plus de 50 % d'eau.

**33.** Lentille de contact en hydrogel faite selon la revendication 22 dont la teneur en eau est entre 25 et 55 %.

**34.** Lentille de contact selon la revendication 26.

**35.** Lentille de contact selon la revendication 27.

**36.** Lentille de contact selon la revendication 28.

**37.** Lentille de contact selon la revendication 29.

**38.** Polymère réticulé qui est le produit d'addition par polymérisation de
(a) un macromère contenant des segments perfluoropolyalkyléther et des segments polyalkyléther ainsi que des portions éthyléniquement insaturées, ayant la formule I, plus spécifiquement tel que représenté dans les formules Ia à Id,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

où
Z est $(C_aF_{2a}O)_b$-$CF_2$-, dans laquelle a est de 1 à 4 ou un mélange de ceux-ci et b est de 2 à 200;
X est une liaison directe, -$CH_2$-, -$CH_2OCH_2CHOHCH_2$-, -$CH_2(OCH_2CH_2)_y$-ou un carbonyle dans lequel y est de 1 à 10;
Q est une liaison directe, -CONH-R-NHCO- ou -ACONH-R-NHCO-où A est un oxa ou un imino et R est un groupe aliphatique divalent ayant de 2 à 14 atomes de carbone, un groupe cycloaliphatique divalent à 5 ou 6 chaînons ayant de 5 à 14 atomes de carbone ou un groupe arylène ayant de 6 à 14 atomes de carbone, et dans lequel le A de Q est fixé à X;
L est -$A(C_mH_{2m}O)_nC_mH_{2m}AY$ ou La, où Y est une liaison directe si L est divalent, ou l'hydrogène, si L est monovalent, et m est de 2 à 4 ou un mélange de ceux-ci et n est de 5 à 100 ; où A est tel que défini ci-dessus;
T est -CONH-$R_5$A- ou -CONH-R-NHCOO$R_5$A- ou -CONH-R-NHCO-A- ou -$R_5$A-ou une liaison directe si A est ici fixé à E, lorsque $R_5$ est un alkylène ou un alkylène hydroxy substitué ayant de 2 à 15 atomes de carbone, et A et R sont tels que définis précédemment;
E est -CO-C($R_1$) = $CHR_2$ ou -CONH-phényl-C($R_1$) = $CR_2H$ ou -CONH-C$(R_4)_2$-phényl-C($R_1$ ) = $CHR_2$ où $R_1$ est l'hydrogène ou le méthyle, et $R_2$ est l'hydrogène, le méthyle ou - $COOR_3$, où $R_3$ est l'hydrogène ou un alkyle ayant de 1 à 4 atomes de carbone à la condition que si $R_1$ est le méthyle, $R_2$ est l'hydrogène ; et où $R_4$ est l'hydrogène ou le méthyle; G est -$(C_aF_{2a}O)_b$-$CF_2[CH_2$-OCONH-R-$NHCOOCH_2CF_2(OC_aF_{2a})_b]_x$- ou -$(C_aF_{2a}O)_b$-$CF_2[CH_2$-NHCONH-R-$NHCONHCH_2CF_2(OC_aF_{2a})_b]_x$- où x est de 1 à 3 ; et a, b et R sont tels que ci-dessus ; et
La est -$A(C_mH_{2m}O)_n[C_mH_{2m}ACONH\text{-}R\text{-}NHCOA(C_mH_{2m}O)_{na}]_zC_mH_{2m}AY$ où na est de 5 à 100, z est de 1 à 10 et Y est une liaison directe si La est divalent, ou l'hydrogène si La est monovalent, et A, R, m

et n sont tels que définis précédemment, et

b) un comonomère vinylique qui est

(i) un monomère vinylique hydrophile,
(ii) un monomère vinylique hydrophobe,
(iii) un agent de réticulation polyréactif,
ou (iv) un mélange d'un ou plus (i), (ii) et (iii).

**39.** Polymère selon la revendication 38, où le monomère vinylique hydrophile est choisi parmi les acrylates et les méthacrylates d'alkyle inférieur hydroxy substitué, l'acrylamide, le méthacrylamide, l'acrylamide et le méthacrylamide d'alkyle inférieur en $C_1$-$C_2$, les acrylates et méthacrylates éthoxylés, les acrylamides et méthacrylamides d'alkyle inférieur hydroxy substitué, les éthers vinyliques d'alkyle inférieur hydroxy substitué, l'éthylène-sulfonate de sodium, le styrène-sulfonate de sodium, l'acide 2-acrylamido-2-méthylpropanesulfonique, le N-vinylpyrrole, le N-vinylsuccinimide, la N-vinylpyrrolidone, la 2- et 4-vinylpyridine, l'acide acrylique, l'acide méthacrylique, un produit aminé (par produit aminé on inclut l'ammonium quaternaire), les acrylates ou méthacrylates d'alkyle inférieur et de mono-alkylamino inférieur ou de dialkylamino inférieur et l'alcool allylique;
le monomère vinylique hydrophobe est choisi parmi les acrylates et méthacrylates d'alkyle en $C_1$-$C_{18}$, les acrylamides et méthacrylamides d'alkyle en $C_3$-$C_{18}$, l'acrylonitrile, le méthacrylonitrile, les alcanoates de vinyle en $C_1$-$C_{18}$, les alcènes en $C_2$-$C_{18}$, les haloalcènes en $C_2$-$C_{18}$, le styrène, les alkyl en $C_1$-$C_6$-styrènes, les vinylalkyléthers où la portion alkyle a de 1 à 6 atomes de carbone, les éthylthiocarbonylaminoéthyl-acrylates et -méthacrylates de perfluoroalkyle en $C_3$-$C_{12}$, les acrylates et méthacrylates de fluoroalkyle en $C_3$-$C_{12}$, les acryloxy et méthacryloxy-alkyl-siloxanes, le N-vinylcarbazole, les esters d'alkyle en $C_1$-$C_{12}$ d'acides maléique, fumarique, itaconique et mésaconique;
et l'agent de réticulation polyréactif est choisi parmi le méthacrylate d'allyle, l'itaconate de diallyle, l'itaconate de monoallyle, le maléate de diallyle, le fumarate de diallyle, le succinate de diallyle, le phtalate de diallyle, le cyanurate de triallyle, l'isocyanurate de triallyle, le carbonate de diéthylèneglycol bis-allyle, le phosphate de triallyle, le trimellitate de triallyle, l'éther allylique, la N,N-diallylmélamine ; le divinylbenzène, le N,N'-méthylène-bis acrylamide, le diméthacrylate d'éthylèneglycol, le diméthacrylate de néopentylglycol, le diméthacrylate de tétraéthylèneglycol, l'hexaméthylène-bis-maléimide, la divinylurée, le bisphénol A bisméthacrylate, l'adipate de divinyle, le triméthacrylate de glycérine, le triacrylate de triméthylolpropane, le trimellitate de trivinyle, le 1,5-pentadiène, le 1,3-bis(4-méthacryloxybutyl)-tétraméthyldisiloxane, le divinyléther, la divinylsulfone : et le diméthacrylate formé en faisant réagir le perfluoropolyalkylétherdiméthanol ou le poly(éthylèneglycol) avec 2 moles de méthacrylate d'isocyanatoéthyle.

**40.** Polymère selon la revendication 38 où, dans le macromère (a), X est - $CH_2$- ou -$CH_2(OCH_2CH_2)_y$- où y est 1 ou 2.

**41.** Polymère selon la revendication 38 où, dans le macromère (a), Q est - ACONH-R-NHCO- où R est le radical dérivé de l'hexane-1,6-diisocyanate, du triméthylhexane-1,6-diisocyanate, du tétraméthylène-diisocyanate, du phénylène-1,4-diisocyanate, du toluène-2,4-diisocyanate, du toluène-2,6-diisocyanate, du m- ou p-tétraméthylxylène-diisocyanate, de l'isophorone-diisocyanate ou du cyclohexane-1,4-diisocyanate.

**42.** Polymère selon la revendication 41 où R est le radical divalent dérivé de l'isophorone-diisocyanate.

**43.** Polymère selon la revendication 38 où, dans le macromère (a), a est 1 ou 2, et b est de 3 à 50.

**44.** Polymère selon la revendication 38 où, dans le macromère (a), L est -$O(C_mH_{2m}O)_nC_mH_{2m}O$- où m est 2 ou un mélange de 2 et 3, et n est 10-50.

**45.** Polymère selon la revendication 38 où, dans le macromère (a), T est - CONH-$R_5$A-et $R_5$ est l'éthylène et A est un oxa.

**46.** Polymère selon la revendication 38 où, dans le macromère (a),T est - CONH-R-NHCOO$R_5$A-et $R_5$ est l'éthylène et R est le radical dérivé d'isophorone-diisocyanate et A est un oxa.

**47.** Polymère selon la revendication 38 où, dans le macromère (a), E est - CO-C($R_1$) = $CHR_2$ où $R_1$ est le méthyle et $R_2$ est l'hydrogène.

**48.** Polymère selon la revendication 38 où, dans le macromère (a), E est - CONH-phényl-C($R_1$) = $CHR_2$ où $R_1$ et $R_2$ sont tous les deux l'hydrogène.

**49.** Polymère selon la revendication 38 où, dans le macromère (a), x est 1, et R est un radical dérivé de l'isophorone-diisocyanate.

**50.** Polymère selon la revendication 38 où, dans La du macromère (a), A est un oxa, R est un radical dérivé de l'isophorone-diisocyanate, z est de 1 à 5 et na est de 5 à 100.

**51.** Polymère selon la revendication 38 où le macromère (a) a la formule (Ia) E-T-L-Q-X-Z-X-Q-L-T-E.

**52.** Polymère selon la revendication 51 où, dans le macromère (a),
E est $-CO-C(CH_3) = CH_2$,
T est $-CONH-CH_2CH_2-O-$,
L est $-O(C_2H_4O)_nC_2H_4O-$ où n est 19-25,
Q est -OCONH-isophorone-NHCO-,
X est $-CH_2-$, et
Z est $-CF_2O(C_2F_4O)_r-(CF_2O)_s-CF_2$ où
r:s est dans le domaine de 1:10 à 5:1 et il est de préférence d'environ 0,7.

**53.** Polymère réticulé selon la revendication 38, où (b) représente jusqu'à 10 % en poids.

**54.** Polymère réticulé selon la revendication 53, où (b) est le 2-hydroxyéthylméthacrylate, la N-vinylpyrrolidone, le N,N-diméthylacrylamide, le diméthacrylate d'éthylèneglycol, le produit de réaction du poly-(éthylèneglycol) avec deux moles de 2-isocyanatoéthylméthacrylate ou le produit de réaction d'un perfluoropolyalkylétherdiméthanol avec deux moles de 2-isocyanatoéthylméthacrylate.

**55.** Procédé pour préparer une lentille de contact en hydrogel en réticulant un macromère (a) avec un comonomère vinylique (b) selon la revendication 38 dans un solvant inerte dans un moule par polymérisation à radicaux libres et par équilibrage de la lentille de contact réticulée résultante, gonflée par un solvant, dans un milieu aqueux.

**56.** Procédé selon la revendication 55, où le solvant est un alcanol inférieur, le N,N-diméthylformamide, l'acétamide, l'acétonitrile, le N,N-diméthylacétamide, le diméthylsulfoxyde, l'acétone, l'acétate de tert-butyle, l'acétate d'isopropyle ou leurs mélanges.

**57.** Procédé selon la revendication 56, où le solvant est l'acétate d'isopropyle.

**58.** Dispositif ophtalmique fait selon la revendication 55.

**59.** Dispositif ophtalmique préparé à partir du produit de la revendication 38.

**60.** Dispositif ophtalmique préparé à partir du produit de la revendication 51.

**61.** Dispositif ophtalmique préparé à partir du produit de la revendication 52.

**62.** Dispositif ophtalmique préparé à partir du produit de la revendication 53.

**63.** Dispositif ophtalmique préparé à partir du produit de la revendication 54.

**64.** Lentille de contact selon la revendication 59.

**65.** Lentille de contact selon la revendication 60.

**66.** Lentille de contact selon la revendication 61.

**67.** Lentille de contact selon la revendication 62.

**68.** Lentille de contact selon la revendication 63.

**69.** Lentille de contact à hydrogel faite selon la revendication 55.

**70.** Lentille de contact à hydrogel faite selon la revendication 55 dont la teneur en eau est supérieure à 20 %, de préférence supérieure à 30 %.

**71.** Lentille de contact à hydrogel faite selon la revendication 55 dont la teneur en eau est supérieure à 40 %, de préférence supérieure à 50 %.

**72.** Lentille de contact à hydrogel faite selon la revendication 55 dont la teneur en eau est entre 25 et 55 %.

**73.** Emploi d'un macromère selon la revendication 1 pour faire une lentille de contact.

**74.** Emploi d'un polymère selon la revendication 38 pour faire une lentille de contact.

**Revendications pour l'Etat contractant suivant : ES**

**1.** Procédé pour la fabrication d'un macromère contenant des segments perfluoropolyalkyléther et des segments polyalkyléther et des portions éthyléniquement insaturées, ayant la formule I, plus spécifiquement comme montré dans les formules Ia à Id

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

où
Z est $(C_aF_{2a}O)_b$-$CF_2$-, dans laquelle a est de 1 à 4 ou un mélange de ceux-ci et b est de 2 à 200 ;
X est une liaison directe, -$CH_2$-, -$CH_2OCH_2CHOHCH_2$-, -$CH_2(OCH_2CH_2)_y$-ou un carbonyle dans lequel y est de 1 à 10;
Q est une liaison directe, -CONH-R-NHCO- ou -ACONH-R-NHCO-où A est un oxa ou un imino et R est un groupe aliphatique divalent ayant de 2 à 14 atomes de carbone, un groupe cycloaliphatique divalent à 5 ou 6 chaînons ayant de 5 à 14 atomes de carbone ou un groupe arylène ayant de 6 à 14 atomes de carbone, et dans lequel le A de Q est fixé à X ;
L est -$A(C_mH_{2m}O)_nC_mH_{2m}AY$ ou La, où Y est une liaison directe si L est divalent, ou l'hydrogène, si L est monovalent, et m est de 2 à 4 ou un mélange de ceux-ci et n est de 5 à 100 ; où A est tel que défini ci-dessus ;
T est -CONH-$R_5$A- ou -CONH-R-NHCOO$R_5$A- ou -CONH-R-NHCO-A- ou -$R_5$A- ou une liaison directe si A est ici fixé à E, lorsque $R_5$ est un alkylène ou un alkylène hydroxy substitué ayant de 2 à 15 atomes de carbone, et A et R sont tels que définis précédemment;
E est -CO-C($R_1$) = $CHR_2$ ou -CONH-phényl-C($R_1$) = $CR_2$H ou -CONH-C$(R_4)_2$-phényl-C($R_1$ ) = $CHR_2$ où $R_1$ est l'hydrogène ou le méthyle, et $R_2$ est l'hydrogène, le méthyle ou - COO$R_3$, où $R_3$ est l'hydrogène ou un alkyle ayant de 1 à 4 atomes de carbone à la condition que si $R_1$ est le méthyle, $R_2$ est l'hydrogène ; et où $R_4$ est l'hydrogène ou le méthyle;
G est -$(C_aF_{2a}O)_b$-$CF_2[CH_2$-OCONH-R-NHCOO$CH_2CF_2(OC_aF_{2a})_b]_x$- ou -$(C_aF_{2a}O)_b$-$CF_2[CH_2$-NHCONH-R-NHCONH$CH_2CF_2(OC_aF_{2a})_b]_x$- où x est de 1 à 3 ; et a, b et R sont tels que ci-dessus ; et
La est -$A(C_mH_{2m}O)_n[C_mH_{2m}$ACONH-R-NHCO$A(C_mH_{2m}O)_{na}]_zC_mH_{2m}AY$
où na est de 5 à 100, z est de 1 à 10 et Y est une liaison directe si La est divalent, ou l'hydrogène si La est monovalent, et A, R, m et n sont tels que définis
précédemment ; caractérisé en ce que l'on fait réagir les matières correspondantes de départ de façon connue en soi.

**2.** Procédé selon la revendication 1, où X est $-CH_2-$ ou $-CH_2(OCH_2CH_2)_y-$où y est 1 ou 2.

**3.** Procédé selon la revendication 1, où Q est -ACONH-R-NHCO- où R est le radical dérivé de l'hexane-1,6-diisocyanate, du triméthyl-hexane-1,6-diisocyanate, du tétraméthylène-diisocyanate, du phénylène-1,4-diisocyanate, du toluène-2,4-diisocyanate, du toluène-2,6-diisocyanate, du m- ou p-tétraméthylxylène-diisocyanate, de l'isophorone-diisocyanate ou du cyclohexane-1,4-diisocyanate.

**4.** Procédé selon la revendication 3, où R est le radical divalent dérivé de l'isophorone-diisocyanate.

**5.** Procédé selon la revendication 1, où dans Z a est 1 ou 2, et b est de 3 à 50.

**6.** Procédé selon la revendication 1, où L est $-O(C_mH_{2m}O)_nC_mH_{2m}O-$ où m est 2 ou un mélange de 2 et 3, et n est 10-50.

**7.** Procédé selon la revendication 1, où T est $-CONH-R_5A-$et $R_5$ est l'éthylène et A est un oxa.

**8.** Procédé selon la revendication 1, où T est $-CONH-R-NHCOOR_5A-$et $R_5$ est l'éthylène et R est le radical dérivé d'isophorone-diisocyanate et A est un oxa.

**9.** Procédé selon la revendication 1, où E est $-CO-C(R_1)=CHR_2$ où $R_1$ est le méthyle et $R_2$ est l'hydrogène.

**10.** Procédé selon la revendication 1, où E est -CONH-phényl-$C(R_1)=CHR_2$ où $R_1$ et $R_2$ sont tous les deux l'hydrogène.

**11.** Procédé selon la revendication 1, où, dans G, x est 1, et R est un radical dérivé de l'isophorone-diisocyanate.

**12.** Procédé selon la revendication 1, où, dans La, A est un oxa, R est un radical dérivé de l'isophorone-diisocyanate, z est de 1 à 5 et na est de 5 à 100.

**13.** Procédé selon la revendication 1, où on prépare un composé ayant la formule (Ia) E-T-L-Q-X-Z-X-Q-L-T-E.

**14.** Procédé selon la revendication 13, où
E est $-CO-C(CH_3)=CH_2$,
T est $-CONH-CH_2CH_2-O-$,
L est $-O(C_2H_4O)_nC_2H_4O-$ où n est 19-25,
Q est -OCONH-isophorone-NHCO-,
X est $-CH_2-$, et
Z est $-CF_2O(C_2F_4O)_r-(CF_2O)_s-CF_2$ où
r:s est dans le domaine de 1:10 à 5:1 et il est de préférence d'environ 0,7.

**15.** Procédé selon la revendication 1 préparé par un couronnement d'extrémité de
(a) $HOCH_2-(C_aF_{2a}O)_b-CF_2-CH_2OH$ où a est de 1 à 4 et b est de 2 à 200 avec
(b)

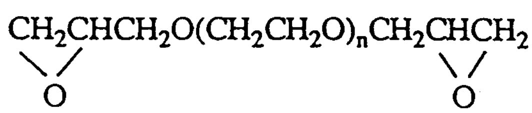

où n est de 5 à 100, suivi d'une réaction avec
(c) le méthacrylate de 2-isocyanatoéthyle où les réactifs a:b:c sont dans un rapport molaire 1:2:2.

**16.** Procédé pour la fabrication d'un produit réticulé d'homopolymérisation, caractérisé en ce qu'un macromère
E-T-L-Q-X-Z-X-Q-L-T-E ou

E-T-L-Q-X-G-X-Q-L-T-E
selon la revendication 1 est homopolymérisé de façon connue en soi..

**17.** Procédé selon la revendication 16, où le macromère est E-T-L-Q-X-Z-X-Q-L-T-E où
E est -CO-C($CH_3$) = $CH_2$,
T est -CONH-$CH_2CH_2$-O-,
L est -O($C_2H_4O$)$_n$$C_2H_4$O- où n est 19-25,
Q est -OCONH-isophorone-NHCO-,
X est -$CH_2$-, et
Z est -$CF_2O(C_2F_4O)_r$-$(CF_2O)_s$-$CF_2$ où
r:s est dans le domaine de 1:10 à 5:1 et il est de préférence d'environ 0,7.

**18.** Procédé pour la fabrication d'un produit réticulé de copolymérisation, caractérisé en ce qu'un macromère
E-T-L-Q-X-Z-X-Q-L-T-E ou
E-T-L-Q-X-Z-X-Q-L
selon la revendication 1 est copolymérisé de façon connue en soi.

**19.** Procédé selon la revendication 18, où plus de 1 % de la matière, de préférence plus de 10 % de la matière, est dérivé du macromère E-T-L-Q-X-Z-X-Q-L-T-E.

**20.** Procédé selon la revendication 18, où plus de 20 % de la matière, de préférence plus de 30 % de la matière, est dérivé du macromère E-T-L-Q-X-Z-X-Q-L-T-E.

**21.** Procédé pour obtenir un produit réticulé d'homopolymérisation en homopolymérisant le macromère de la revendication 15 de façon connue en soi.

**22.** Procédé pour préparer une lentille de contact en hydrogel en réticulant un macromère selon la revendication 1 dans un solvant inerte dans un moule par polymérisation à radicaux libres et par équilibrage de la lentille de contact réticulée résultante, gonflée par un solvant, dans un milieu aqueux.

**23.** Procédé selon la revendication 22, où le solvant est un alcanol inférieur, le N,N-diméthylformamide, l'acétamide, l'acétonitrile, le N,N-diméthylacétamide, le diméthylsulfoxyde, l'acétone, l'acétate de tert-butyle, l'acétate d'isopropyle ou leurs mélanges.

**24.** Procédé selon la revendication 23 où le solvant est l'acétate d'isopropyle.

**25.** Dispositif ophtalmique fait selon la revendication 22.

**26.** Dispositif ophtalmique préparé à partir du produit de la revendication 16.

**27.** Dispositif ophtalmique préparé à partir du produit de la revendication 17.

**28.** Dispositif ophtalmique préparé à partir du produit de la revendication 18.

**29.** Dispositif ophtalmique préparé à partir du produit de la revendication 21.

**30.** Lentille de contact en hydrogel faite selon la revendication 22.

**31.** Lentille de contact en hydrogel faite selon la revendication 22 qui comporte plus de 20 % d'eau, de préférence plus de 30 % d'eau.

**32.** Lentille de contact en hydrogel faite selon la revendication 22 qui comporte plus de 40 % d'eau, de préférence plus de 50 % d'eau.

**33.** Lentille de contact en hydrogel faite selon la revendication 22 dont la teneur en eau est entre 25 et 55 %.

**34.** Lentille de contact selon la revendication 26.

**35.** Lentille de contact selon la revendication 27.

**36.** Lentille de contact selon la revendication 28.

**37.** Lentille de contact selon la revendication 29.

**38.** Procédé pour fabriquer un polymère réticulé qui est le produit d'addition par polymérisation de
(a) un macromère contenant des segments perfluoropolyalkyléther et des segments polyalkyléther ainsi que des portions éthyléniquement insaturées, ayant la formule I, plus spécifiquement tel que représenté dans les formules Ia à Id,

E-T-L-Q-X-Z-X-Q-L-T-E, (Ia)

E-T-L-Q-X-Z-X-Q-L, (Ib)

E-T-L-Q-X-G-X-Q-L-T-E, (Ic)

E-T-L-Q-X-G-X-Q-L, (Id)

où
Z est $(C_aF_{2a}O)_b$-$CF_2$-, dans laquelle a est de 1 à 4 ou un mélange de ceux-ci et b est de 2 à 200;
X est une liaison directe, -$CH_2$-, -$CH_2OCH_2CHOHCH_2$-, -$CH_2(OCH_2CH_2)_y$-ou un carbonyle dans lequel y est de 1 à 10;
Q est une liaison directe, -CONH-R-NHCO- ou -ACONH-R-NHCO-où A est un oxa ou un imino
et R est un groupe aliphatique divalent ayant de 2 à 14 atomes de carbone, un groupe cycloaliphatique divalent à 5 ou 6 chaînons ayant de 5 à 14 atomes de carbone ou un groupe arylène ayant de 6 à 14 atomes de carbone, et dans lequel le A de Q est fixé à X ;
L est -$A(C_mH_{2m}O)_nC_mH_{2m}AY$ ou La, où Y est une liaison directe si L est divalent, ou l'hydrogène, si L est monovalent, et m est de 2 à 4 ou un mélange de ceux-ci et n est de 5 à 100 ; où A est tel que défini ci-dessus ;
T est -CONH-$R_5$A- ou -CONH-R-NHCOO$R_5$A- ou -CONH-R-NHCO-A- ou -$R_5$A-ou une liaison directe si A est ici fixé à E, lorsque $R_5$ est un alkylène ou un alkylène hydroxy substitué ayant de 2 à 15 atomes de carbone, et A et R sont tels que définis précédemment;
E est -CO-C($R_1$ ) = $CHR_2$ ou -CONH-phényl-C($R_1$) = $CR_2$H ou -CONH-C$(R_4)_2$-phényl-C($R_1$) = $CHR_2$
où $R_1$ est l'hydrogène ou le méthyle, et $R_2$ est l'hydrogène, le méthyle ou - $COOR_3$,
où $R_3$ est l'hydrogène ou un alkyle ayant de 1 à 4 atomes de carbone à la condition que si $R_1$ est le méthyle, $R_2$ est l'hydrogène ; et où $R_4$ est l'hydrogène ou le méthyle ; G est -$(C_aF_{2a}O)_b$-$CF_2[CH_2$-$OCONH$-R-$NHCOOCH_2CF_2(OC_aF_{2a})_b]_x$- ou -$(C_aF_{2a}O)_b$-$CF_2[CH_2$-NHCONH-R-$NHCONHCH_2CF_2$-$(OC_aF_{2a})_b]_x$- où x est de 1 à 3 ; et a, b et R sont tels que ci-dessus; et
La est -$A(C_mH_{2m}O)_n[C_mH_{2m}ACONH$-R-$NHCOA(C_mH_{2m}O)_{na}]_zC_mH_{2m}AY$
où na est de 5 à 100, z est de 1 à 10 et Y est une liaison directe si La est divalent, ou l'hydrogène si La est monovalent, et A, R, m et n sont tels que définis précédemment, et
b) un comonomère vinylique qui est
(i) un monomère vinylique hydrophile,
(ii) un monomère vinylique hydrophobe,
(iii) un agent de réticulation polyréactif,
ou (iv) un mélange d'un ou plus (i), (ii) et (iii) ;
caractérisé en ce que l'on copolymérise de façon conventionnelle le macromère et un ou plusieurs comonomères vinyliques tels que décrits précédemment.

**39.** Procédé selon la revendication 38, où le monomère vinylique hydrophile est choisi parmi les acrylates et les méthacrylates d'alkyle inférieur hydroxy substitué, l'acrylamide, le méthacrylamide, l'acrylamide et le méthacrylamide d'alkyle inférieur en $C_1$-$C_2$, les acrylates et méthacrylates éthoxylés, les acrylamides et méthacrylamides d'alkyle inférieur hydroxy substitué, les éthers vinyliques d'alkyle inférieur hydroxy substitué, l'éthylène-sulfonate de sodium, le styrène-sulfonate de sodium, l'acide 2-acrylamido-2-méthylpropanesulfonique, le N-vinylpyrrole, le N-vinylsuccinimide, la N-vinylpyrrolidone, la

2- et 4-vinylpyridine, l'acide acrylique, l'acide méthacrylique, un produit aminé (par produit aminé on inclut l'ammonium quaternaire), les acrylates ou méthacrylates d'alkyle inférieur et de mono-alkylamino inférieur ou de dialkylamino inférieur et l'alcool allylique ;
le monomère vinylique hydrophobe est choisi parmi les acrylates et méthacrylates d'alkyle en $C_1$-$C_{18}$, les acrylamides et méthacrylamides d'alkyle en $C_3$-$C_{18}$, l'acrylonitrile, le méthacrylonitrile, les alcanoates de vinyle en $C_1$-$C_{18}$, les alcènes en $C_2$-$C_{18}$, les haloalcènes en $C_2$-$C_{18}$, le styrène, les alkyl en $C_1$-$C_6$-styrènes, les vinylalkyléthers où la portion alkyle a de 1 à 6 atomes de carbone, les éthylthiocarbonylaminoéthyl-acrylates et -méthacrylates de perfluoroalkyle en $C_3$-$C_{12}$, les acrylates et méthacrylates de fluoroalkyle en $C_3$-$C_{12}$, les acryloxy et méthacryloxy-alkyl-siloxanes, le N-vinylcarbazole, les esters d'alkyle en $C_1$-$C_{12}$ d'acides maléique, fumarique, itaconique et mésaconique ;
et l'agent de réticulation polyréactif est choisi parmi le méthacrylate d'allyle, l'itaconate de diallyle, l'itaconate de monoallyle, le maléate de diallyle, le fumarate de diallyle, le succinate de diallyle, le phtalate de diallyle, le cyanurate de triallyle, l'isocyanurate de triallyle, le carbonate de diéthylèneglycol bis-allyle, le phosphate de triallyle, le trimellitate de triallyle, l'éther allylique, la N,N-diallylmélamine ; le divinylbenzène, le N,N'-méthylène-bis acrylamide, le diméthacrylate d'éthylèneglycol, le diméthacrylate de néopentylglycol, le diméthacrylate de tétraéthylèneglycol, l'hexaméthylène-bis-maléimide, la divinylurée, le bisphénol A bisméthacrylate, l'adipate de divinyle, le triméthacrylate de glycérine, le triacrylate de triméthylolpropane, le trimellitate de trivinyle, le 1,5-pentadiène, le 1,3-bis(4-méthacryloxybutyl)-tétraméthyldisiloxane, le divinyléther, la divinylsulfone ; et le diméthacrylate formé en faisant réagir le perfluoropolyalkylétherdiméthanol ou le poly(éthylèneglycol) avec 2 moles de méthacrylate d'isocyanatoéthyle.

**40.** Procédé selon la revendication 38 où, dans le macromère (a), X est - $CH_2$- ou -$CH_2(OCH_2CH_2)_y$- où y est 1 ou 2.

**41.** Procédé selon la revendication 38 où, dans le macromère (a), Q est - ACONH-R-NHCO- où R est le radical dérivé de l'hexane-1,6-diisocyanate, du triméthyl-hexane-1,6-diisocyanate, du tétraméthylène-diisocyanate, du phénylène-1,4-diisocyanate, du toluène-2,4-diisocyanate, du toluène-2,6-diisocyanate, du m- ou p-tétraméthylxylène-diisocyanate, de l'isophorone-diisocyanate ou du cyclohexane-1,4-diisocyanate.

**42.** Procédé selon la revendication 41 où R est le radical divalent dérivé de l'isophorone-diisocyanate.

**43.** Procédé selon la revendication 38 où, dans le macromère (a), a est 1 ou 2, et b est de 3 à 50.

**44.** Procédé selon la revendication 38 où, dans le macromère (a), L est -$O(C_mH_{2m}O)_nC_mH_{2m}O$- où m est 2 ou un mélange de 2 et 3, et n est 10-50.

**45.** Procédé selon la revendication 38 où, dans le macromère (a), T est - CONH-$R_5$A- et $R_5$ est l'éthylène et A est un oxa.

**46.** Procédé selon la revendication 38 où, dans le macromère (a),T est - CONH-R-NHCOO$R_5$A-et $R_5$ est l'éthylène et R est le radical dérivé d'isophorone-diisocyanate et A est un oxa.

**47.** Procédé selon la revendication 38 où, dans le macromère (a), E est - CO-C($R_1$) = $CHR_2$ où $R_1$ est le méthyle et $R_2$ est l'hydrogène.

**48.** Procédé selon la revendication 38 où, dans le macromère (a), E est - CONH-phényl-C($R_1$) = $CHR_2$ où $R_1$ et $R_2$ sont tous les deux l'hydrogène.

**49.** Procédé selon la revendication 38 où, dans le macromère (a), x est 1, et R est un radical dérivé de l'isophorone-diisocyanate.

**50.** Procédé selon la revendication 38 où, dans La du macromère (a), A est un oxa, R est un radical dérivé de l'isophorone-diisocyanate, z est de 1 à 5 et na est de 5 à 100.

**51.** Procédé selon la revendication 38 où le macromère (a) a la formule (Ia) E-T-L-Q-X-Z-X-Q-L-T-E.

**52.** Procédé selon la revendication 51 où, dans le macromère (a),
E est $-CO-C(CH_3)=CH_2$,
T est $-CONH-CH_2CH_2-O-$,
L est $-O(C_2H_4O)_nC_2H_4O-$ où n est 19-25,
Q est -OCONH-isophorone-NHCO-,
X est $-CH_2-$, et
Z est $-CF_2O(C_2F_4O)_r-(CF_2O)_s-CF_2$ où
r:s est dans le domaine de 1:10 à 5:1 et il est de préférence d'environ 0,7.

**53.** Procédé selon la revendication 38, où (b) représente jusqu'à 10 % en poids.

**54.** Procédé selon la revendication 53, où (b) est le 2-hydroxyéthylméthacrylate, la N-vinylpyrrolidone, le N,N-diméthylacrylamide, le diméthacrylate d'éthylèneglycol, le produit de réaction du poly-(éthylèneglycol) avec deux moles de 2-isocyanatoéthylméthacrylate ou le produit de réaction d'un perfluoropolyalkylétherdiméthanol avec deux moles de 2-isocyanatoéthylméthacrylate.

**55.** Procédé pour préparer une lentille de contact en hydrogel en réticulant un macromère (a) avec un comonomère vinylique (b) selon la revendication 38 dans un solvant inerte dans un moule par polymérisation à radicaux libres et par équilibrage de la lentille de contact réticulée résultante, gonflée par un solvant, dans un milieu aqueux.

**56.** Procédé selon la revendication 55, où le solvant est un alcanol inférieur, le N,N-diméthylformamide, l'acétamide, l'acétonitrile, le N,N-diméthylacétamide, le diméthylsulfoxyde, l'acétone, l'acétate de tert-butyle, l'acétate d'isopropyle ou leurs mélanges.

**57.** Procédé selon la revendication 56, où le solvant est l'acétate d'isopropyle.

**58.** Dispositif ophtalmique fait selon la revendication 55.

**59.** Dispositif ophtalmique préparé à partir du produit de la revendication 38.

**60.** Dispositif ophtalmique préparé à partir du produit de la revendication 51.

**61.** Dispositif ophtalmique préparé à partir du produit de la revendication 52.

**62.** Dispositif ophtalmique préparé à partir du produit de la revendication 53.

**63.** Dispositif ophtalmique préparé à partir du produit de la revendication 54.

**64.** Lentille de contact selon la revendication 59.

**65.** Lentille de contact selon la revendication 60.

**66.** Lentille de contact selon la revendication 61.

**67.** Lentille de contact selon la revendication 62.

**68.** Lentille de contact selon la revendication 63.

**69.** Lentille de contact à hydrogel faite selon la revendication 55.

**70.** Lentille de contact à hydrogel faite selon la revendication 55 dont la teneur en eau est supérieure à 20 %, de préférence supérieure à 30 %.

**71.** Lentille de contact à hydrogel faite selon la revendication 55 dont la teneur en eau est supérieure à 40 %, de préférence supérieure à 50 %.

**72.** Lentille de contact à hydrogel faite selon la revendication 55 dont la teneur en eau est entre 25 et 55 %.

**73.** Emploi d'un macromère selon la revendication 1 pour faire une lentille de contact.

**74.** Emploi d'un polymère selon la revendication 38 pour faire une lentille de contact.